# EUROPEAN PATENT SPECIFICATION

(11) **EP 3 612 609 B1**
(45) Date of publication and mention of the grant of the patent: **28.12.2022**
(21) Application number: 18787067.0
(22) Date of filing: 17.04.2018
(51) Int. Cl.: C09J 4/02, C09J 4/06, C08F 285/00, C08F 287/00

(54) **ADHESIVE COMPOSITIONS**
KLEBSTOFFZUSAMMENSETZUNGEN
COMPOSITIONS ADHÉSIVES

(30) Priority: 21.04.2017 US 201762488354 P
(43) Date of publication of application: 26.02.2020
(73) Proprietor: Henkel AG & Co. KGaA, 40589 Düsseldorf (DE)
(72) Inventor: HURLBURT, Lynnette, Manchester Connecticut 06042 (US); SWEENEY, Nigel, Dublin 24 (IE); DEEGAN, Brian, W91 E6KO, Co. Wicklow (IE); MESSANA, Andrew D., Newington Connecticut 06111 (US); GALLIGAN, Marc, Dublin 8 (IE)
(74) Representative: Henkel IP Department
(86) International application number: PCT/US2018/027907
(87) International publication number: WO 2018/195038

(56) References cited:
- WO-A1-02/46291
- WO-A1-02/46291
- WO-A1-2009/070172
- WO-A1-2015/164087
- US-A1- 2013 190 409
- US-A1- 2014 004 354
- US-A1- 2014 004 354
- US-A1- 2017 044 087
- US-A1- 2017 044 087

## Description

### BACKGROUND

### Field

The present invention provides adhesive compositions, sometimes in a two part configuration which include a first part containing a (meth)acrylate component, an organic peroxide and an acetal-containing free radically curable component, and a second part containing a (meth)acrylate component, benzoylthiourea derivatives or benzoylthiourethane derivatives, and an acid or acid ester.

### Brief Description of Related Technology

Acrylic-based adhesive compositions are well known. See e.g. U.S. Patent No. 4,536,546 (Briggs). While adhesives based on this technology appear to have been sold under the tradename PLEXUS MA 300 and 310 by Illinois Tool Works Inc., Chicago, IL, they can exhibit an obnoxious odor and they are toxic to handle, which are significant drawbacks to their use.

The first and second parts are of sufficiently low viscosity to be easily dispensed with a pumping apparatus. To form this adhesive, the first and second parts are mixed, and immediately after mixing, the mixture is of a higher viscosity, such that the adhesive does not sag, drip, or migrate, after application to a surface within the open time of the mixture, and the mixed first and second parts cure. By the term "open time" is meant the elapsed time between the mixture of the adhesive to the curing.

Recently, researchers at Henkel invented and developed a cure accelerator technology based on benzoylthiourea or benzoylthiourethane derivatives. U.S. Patent Application Publication No. US 2014/0004354 provides to that end a two part curable composition comprising:
Part A: one or more compounds within structures **I** or **IA** below: 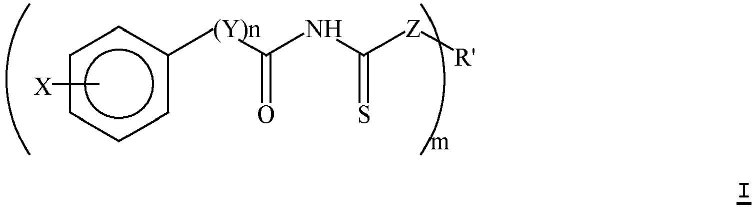
   wherein Z is 0 or N-R, where R is selected from hydrogen, alkyl, alkenyl, aryl, hydroxyalkyl, hydroxyalkenyl, alkylene (meth)acrylate, carbonyl, carboxyl, or sulfonato, R' is selected from hydrogen, alkyl, alkenyl, aryl, hydroxyalkyl, hydroxyalkenyl, alkylene (meth)acrylate, carbonyl, carboxyl, or sulfonato, or R and and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl or haloalkyl; and Y is -SO₂NH-, - CONH-, -NH-, and -PO(NHCONHCSNH₂)NH-; and n is 0 or 1 and m is 1 or 2, or 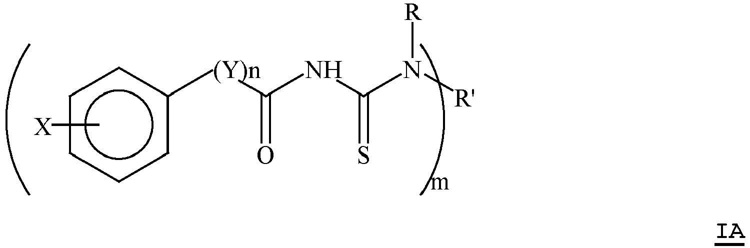
   wherein R and R' are independently selected from hydrogen, alkyl, alkenyl, aryl, hydroxyalkyl, hydroxyalkenyl, alkylene (meth)acrylate, carbonyl, carboxyl, or sulfonato, or R and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, sulfonate, hydroxyl or haloalkyl; and Y is -SO₂NH-, -CONH-, -NH-, and -PO(NHCONHCSNH₂)NH-; and n is 0 or 1 and m is 1 or 2; and
Part B: an oxidant,
   where at least one of Part A or Part B comprises a (meth)acrylate component.

WO2002/46291 discloses multi-functional alphaalkoxyalkyl (meth)acrylate and methacrylate ester compositions.

However, existing compositions do not possess the desired fast fixturing and good adhesion properties for the assembly of laminates, such as hand held display devices, coupled with the ability to enable debonding of substrates adhesively mated with the composition therebetween. A need exists for such compositions.

There is also a need for adhesive compositions that can form a robust bond on and/or between a variety of substrates, such as ink coated glass, composites and engineering plastics, that also have the ability to debond when required. In this way, should the end-user need to reuse, recycle or remove parts they may be so. For thermally activated debonding, temperatures below 100°C are preferred so as to not damage the substrates.

The state of the art seemingly has not provided such adhesive compositions.

### SUMMARY

The present invention provides a solution to that need, and more.

The present invention relates to an adhesive composition in a two part configuration comprising:
(a) Part (A) comprising a (meth)acrylate component, an organic peroxide and a hemiacetal ester-containing free radically curable component, wherein the hemiacetal ester-containing free radically curable component is represented by compounds selected from the group consisting of 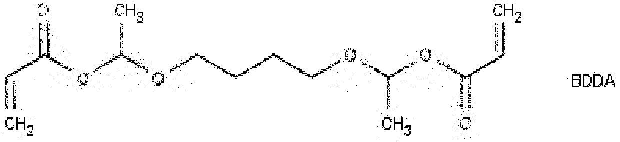 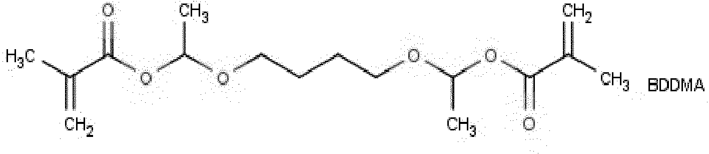 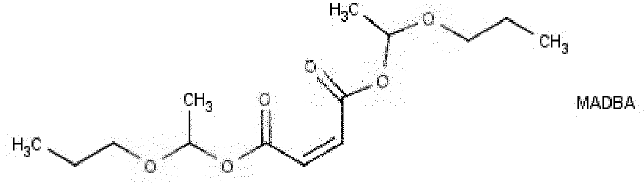 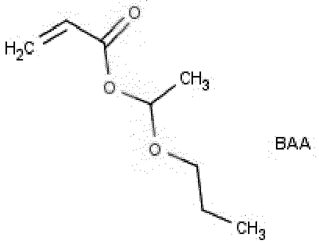 ; and
(b) Part (B) comprising a (meth)acrylate component, and benzoylthiourea derivatives or benzoylthiourethane derivatives,and an acid or acid ester, wherein the (meth)acrylate component of the Part (A) and the Part (B) is selected from the group consisting of methyl (meth)acrylate, (meth)acrylic acid, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(meth)acryloyloxypropyl trimethoxysilane, (meth)acrylic acid-ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate, ethoxylated trimethylolpropane triacrylate, trimethylol propane trimethacrylate, dipentaerythritol monohydroxypentacrylate, pentaerythritol triacrylate, ethoxylated trimethylolpropane triacrylate, 1,6-hexanedioldiacrylate, neopentyl glycoldiacrylate, pentaerythritol tetraacrylate, 1,2-butylene glycoldiacrylate, trimethylopropane ethoxylate tri(meth)acrylate, glyceryl propoxylate tri(meth)acrylate, trimethylolpropane tri(meth)acrylate, dipentaerythritol monohydroxy penta(meth)acrylate, tri(propylene glycol) di(meth)acrylate, neopentylglycol propoxylate di(meth)acrylate, 1,4-butanediol di(meth)acrylate, polyethyleneglycol di(meth)acrylate, triethyleneglycol di(meth)acrylate, butylene glycol di(meth)acrylate, ethoxylated bisphenol A di(meth)acrylate, and combinations thereof.

When the first and second parts are mixed and applied to at least one substrate to be adhesively mated, the composition will have up to 5 minutes of open time and when the substrates are mated they will show a fixture time of 5 minutes of less at room temperature (23°C).

In another aspect of the invention there is provided a method of preparing a two-part adhesive composition which includes:
(a) forming Part (A) comprising a (meth)acrylate component, an organic peroxide and a hemiacetal ester-containing free radically curable component, wherein the hemiacetal ester-containing free radically curable component is represented by compounds selected from the group consisting of 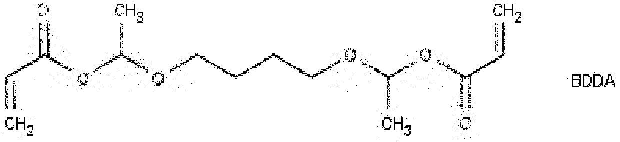 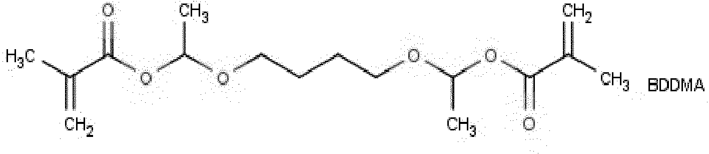 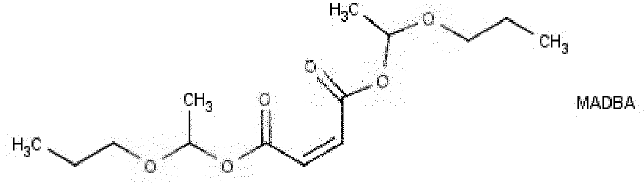 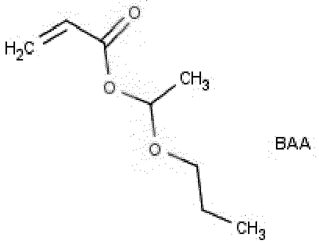 ; and
(b) forming Part (B) comprising a (meth)acrylate component, and benzoylthiourea derivatives or benzoylthiourethane derivatives,and an acid or acid ester.

In yet another aspect, there is provided a method of bonding a first surface to a second surface, which includes the step of:
providing a two part composition comprising:
Part (A) comprising a (meth)acrylate component, an organic peroxide and a hemiacetal ester-containing free radically curable component wherein the hemiacetal ester-containing free radically curable component is represented by compounds selected from the group consisting of 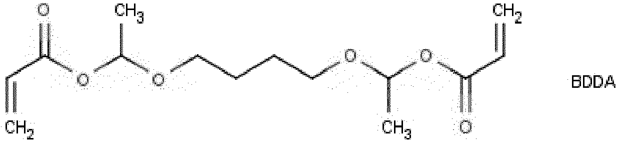 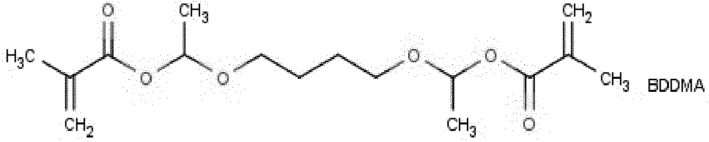 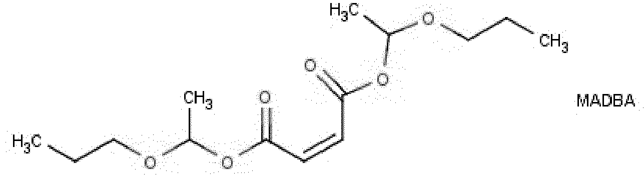 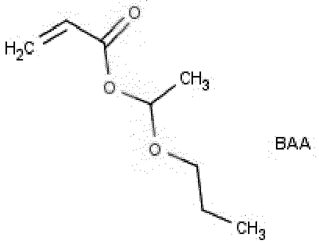
(a) ; and
(b) Part (B)comprising a (meth)acrylate component, and benzoylthiourea derivatives or benzoylthiourethane derivatives,and an acid or acid ester.
where when the first and second parts are mixed and applied to at least one substrate, the composition will have up to 5 minutes of open time and when the substrates are mated they will have a cure time of 20 minutes or less at 80°C and a fixture time of less than 5 minutes.

In another aspect, the present invention there is provided an adhesive composition which comprising:
(a) a (meth)acrylate component;
(b) a cure package comprising an organic peroxide and benzoylthiourea derivatives or benzoylthiourethane derivatives;
(c) an acid or acid ester and
a hemiacetal ester-containing free radically curable component, wherein the hemiacetal ester-containing free radically curable component is represented by compounds selected from the group consisting of

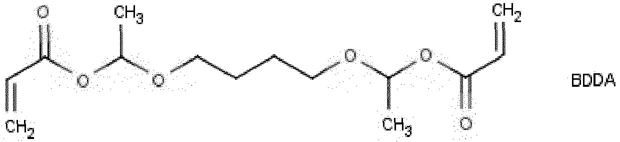

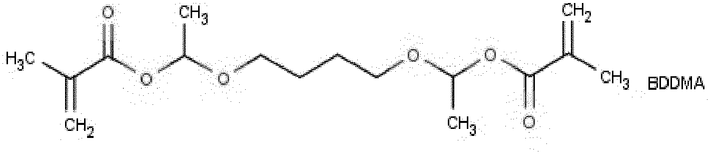

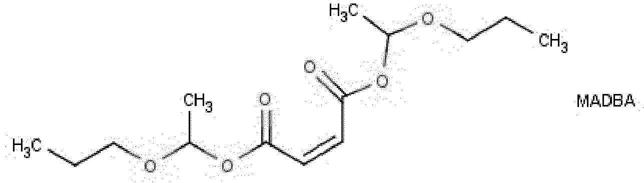

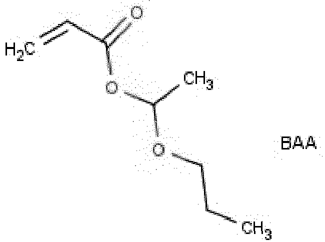

### DETAILED DESCRIPTION

The adhesive compositions of this invention provide enhanced adhesion to substrate surfaces constructed from a variety of materials, many of which are metallic.

The present invention therefore provides adhesive compositions in a two part configuration as defined in claim 1.

Among the substrates where enhanced adhesive and bonding strength is achieved are metal substrates, such as mild steel, stainless steel and aluminum, glass substrates (such as ink-coated glass substrates), and various plastic substrates (such as acrylics, polycarbonate, polycarbonate-ABS and nylon).

The combination of the Part (A) composition and the Part (B) composition results in a curable composition suitable for use in mating adhesively one substrate surface to another substrate surface. One or more of the substrates may be constructed to form an adhesive joint or a laminate. After curing, the reaction product of the composition is an adhesive bond between the two substrate surfaces.

While the two part compositions may be used in a variety of commercial applications, they are particularly useful in the assembly of electronic display devices, such as hand-held phone and computer devices.

### PART (A)

### (Meth)acrylate Component

The useful amount of the (meth)acrylate component typically ranges from 20 percent by weight to 80 percent by weight of the total composition. Desirably, the inventive compositions contain from 50 percent by weight to 70 percent by weight of (meth)acrylate component.

The (meth)acrylate component of the Part (A) and the Part (B) is selected from the group consisting of tetrahydrofurfuryl (meth)acrylate, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(meth)acryloyloxypropyltrimethoxysilane, (meth)acrylic acid-ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate, ethoxylated trimethylolpropane triacrylate, trimethylol propane trimethacrylate, dipentaerythritol monohydroxypentaacrylate, pentaerythritol triacrylate, ethoxylated trimethylolpropane triacrylate, 1,6-hexanedioldiacrylate, neopentyl glycoldiacrylate, pentaerythritol tetraacrylate, 1,2-butylene glycoldiacrylate, trimethylopropane ethoxylate tri(meth)acrylate, glyceryl propoxylate tri(meth)acrylate, trimethylolpropane tri(meth)acrylate, dipentaerythritol monohydroxy penta(meth)acrylate, tri(propylene glycol) di(meth)acrylate, neopentylglycol propoxylate di(meth)acrylate, 1,4-butanediol di(meth)acrylate, polyethyleneglycol di(meth)acrylate, triethyleneglycol di(meth)acrylate, butylene glycol di(meth)acrylate and ethoxylated bisphenol A di(meth)acrylate. These monomers may be used each alone or a plurality of them may be copolymerized. Particularly desirable (meth)acrylate ester monomers include those where the alcohol portion of the ester group contains 1-8 carbon atoms. For instance, 2-ethylhexyl methacrylate, hydroxyethyl methacrylate, cyclohexyl methacrylate, ethyl methacrylate, 1,3-butanedioldimethacrylate (BDMA), butyl methacrylate and methyl methacrylate (MMA), are examples.

Particularly desirable however is tetrahydrofurfuryl (meth)acrylate as at least a portion of the (meth)acrylate component.

The amount of the (meth)acrylate component used in the Part (A) composition may be from 20 to 95 percent by weight, such as 40 to 75 percent by weight.

### Hemiacetal ester-containing

### Free Radically Curable Component

The hemiacetal ester-containing free radically curable component used in the present invention is represented by compounds selected from the group consisting of

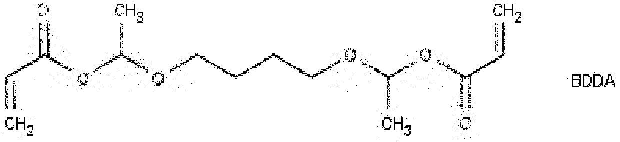

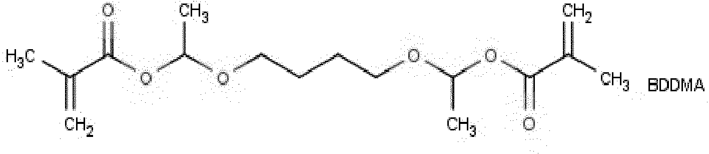

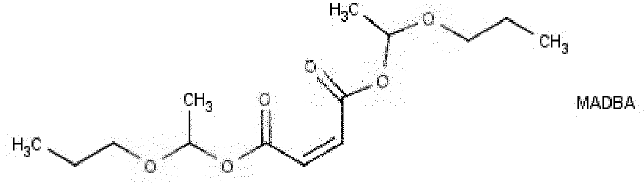

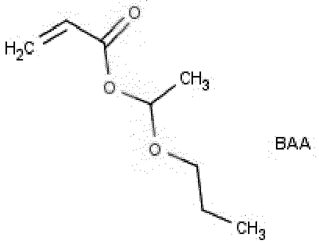

The amount of the acetal-containing (meth)acrylate compound used in the Part (A) composition may be from 1 to 20 percent by weight, such as 2.5 to 10 percent by weight.

### Peroxy Initiators

A class of peroxy initiators particularly suitable to the present invention is the hydroperoxy initiators. Of these, organic hydroperoxides are particularly. Particularly preferred organic hydroperoxides include, p-methane hydroperoxide, diisopropyl benzene hydroperoxide, pinene hydroperoxide, methyl ethyl ketone hydroperoxide, t-butyl-2-hydroxyethyl peroxide, t-butyl peroxymaleic acid, cumene hydroperoxide (CHP), tertiarybutyl hydroperoxide (TBH), and benzoyl peroxide (BP). Additionally, inorganic peroxides and compositions such as peroxy esters as for example t-butyl perbenzoate, benzophone peroxyesters and fluorenone peroxyesters, peroxy carbonates and halogen containing compounds having electronic structures which facilitate free radical formation, esters which decompose to form free radicals are also useful. The term "peroxy" is intended to mean peroxides, hydroperoxides and peresters which are suitable for preparing anaerobically curing system.

The peroxy polymerization initiators may be used in the Part (A) compositions in amounts sufficient to perform their initiation function. Useful, non-limiting amounts include 0.25 percent by weight to 10 percent by weight based on the total composition, and desirably 1 percent by weight to 3 percent by weight based on the total composition.

### Free Radical Inhibitors

Free radical polymerization inhibitors may be used in the present invention to prevent premature reaction prior to mixing.

Numerous suitable free-radical polymerization inhibitors are known in the art, and include quinones, hydroquinones, hydroxylamines, nitroxyl compounds, phenols, amines, arylamines, quinolines, phenothiazines, and the like. Particularly useful free radical inhibitors include hydroquinone, tertiary butylhydroquinone ("TBHQ"), methyl hydroquinone, hydroxyethylhydroquinone, phenothiazine, and NAUGARD-R (blend of N-alkyl substituted p-phenylenediamines, from Crompton Corp.). One or more individual free radical inhibitor components may also be combined.

The amount of the free radical inhibitor component used in the Part (A) composition may be from 0 to 1 percent by weight, such as 0.05 to 0.2 percent by weight.

### PART (B)

### (Meth)acrylate Component

The (meth)acrylate component used in part (B) may be any one or more of the (meth)acrylates used in part (A).

The amount of the (meth)acrylate component used in the Part (B) composition may be from 20 to 95 percent by weight, such as 40 to 75 percent by weight.

### Reactive Acid Component

The inventive compositions include an acid or acid ester. Desirably, this component is only in the Part (B) composition. Suitable acids or acid esters include phosphoric acid or derivatives, phosphate acid esters, and sulfonic acids or derivatives. A preferred reactive acid component is a phosphate acid ester.

The acid monomer is a free-radical polymerizable acid monomer, such as ethylenically unsaturated mono or polycarboxylic acids, maleic acid and crotonic acid. Desirable ones include methacrylic acid ("MAA") and acrylic acid. The reactive acid component also modulates and decelerates the curing time of the thermoset composition.

Suitable phosphate esters include those represented by the formula: 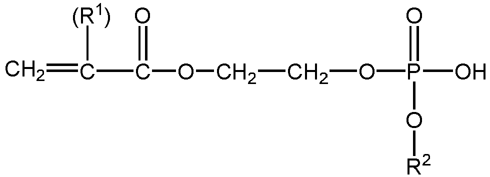 where here R¹ is H or CH₃, and R² is H, or a radical represented by the structure: 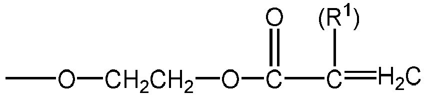 where R¹ is H or CH₃. A particularly useful phosphate ester is hydroxyl ethyl methacrylate ("HEMA") phosphate ester, which is sold under the tradenames T-MULZ 1228 or HARCRYL 1228 or 1228M, each available from Harcross Chemicals, Kansas City, KS. Also included are structures with at least one strong acid "active hydrogen" group, or with at least one phosphonic acid active hydrogen group (R₁R₂POOH), such as hydroxyl ethyl diphosphonic acid, phosphonic acid, and derivatives, or oligomeric or polymeric structures with phosphonic acid functionality or similar acid strength functionality.

The reactive acid component may be present from 0.25 percent by weight to 15 percent by weight of the total composition.

### Benzoylthiourea Derivatives or Benzoylthiourethane Derivatives

The benzoylthiourea derivatives or benzoylthiourethane derivatives may be within general structure I 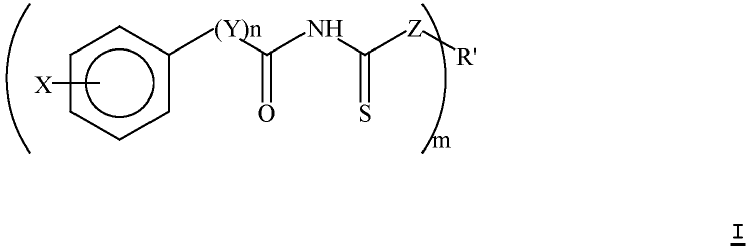 where Z is 0 or N-R, where R is selected from hydrogen, alkyl, alkenyl, hydroxyalkyl, hydroxyalkenyl, carbonyl, alkylene (meth)acrylate, carboxyl, or sulfonato, or R' is a direct bond attaching to the phenyl ring; R' is selected from hydrogen, alkyl, alkenyl, cycloalkyl, aryl, hydroxyalkyl, hydroxyalkenyl, alkylene- or alkenylene-ether, carbonyl, alkylene (meth)acrylate, carboxyl, nitroso or sulfonato; X is halogen, alkyl, alkenyl, hydroxyalkyl, hydroxyalkenyl, alkoxy, amino, carboxyl, nitroso, sulfonate, hydroxyl or haloalkyl; and Y is - SO₂NH-, -CONH-, -NH-, and -PO(NHCONHCSNH₂)NH-; and n is 0 or 1 and m is 1 or 2.

A more specific general structure is shown below: 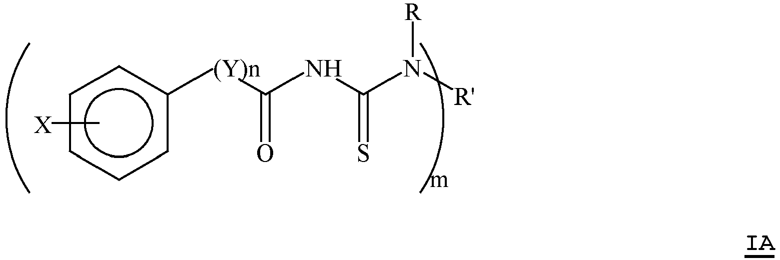 where R and R' are independently selected from hydrogen, alkyl, alkenyl, aryl, hydroxyalkyl, hydroxyalkenyl, alkylene (meth)acrylate, carbonyl, carboxyl, or sulfonato, or R and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl or haloalkyl; and Y is -SO₂NH-, -CONH-, -NH-, and - PO(NHCONHCSNH₂)NH-; and n is 0 or 1 and m is 1 or 2.

More specifically, the benzoylthiourea or benzoylthiourethane derivatives may be within structures **II** or **IIA,** respectively 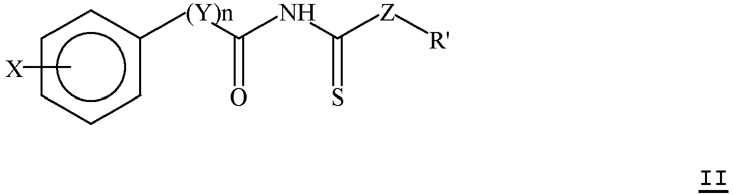 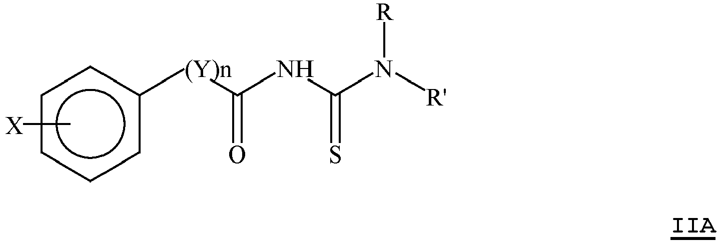 where R, R', Z, X, Y, and n are as defined above.

More specific examples of the benzoylthiourea or benzoylthiourethane derivatives within structures **II** and **IIA,** respectively, are set forth below 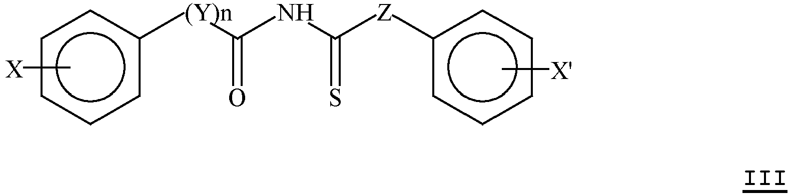 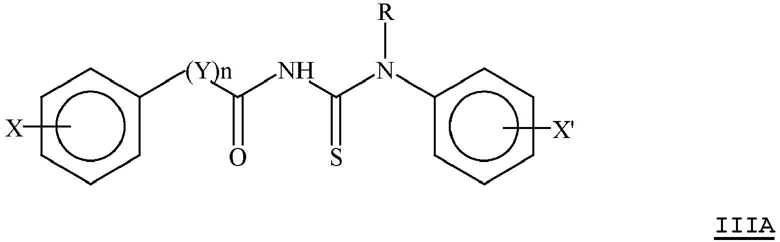 where R, X, Y, and n are as defined above, and X' is defined as X.

Alternatively, the benzoylthiourea or benzoylthiourethane derivatives within structure **I** may be a bis version, where R' is a linker. That is, 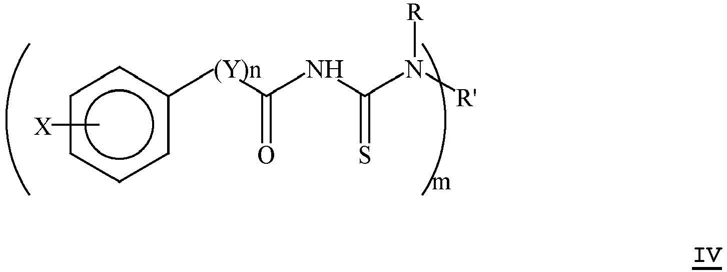 where R, R', X, Y, and n are as defined above, and m is 2.

And even more specifically, the benzoylthiourea or benzoylthiourethane derivatives may be 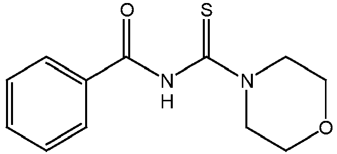 Benzoyl morpholinethiourea (BMTU) 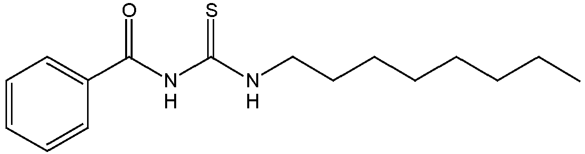 Benzoyl octylthiourea (BOTU) 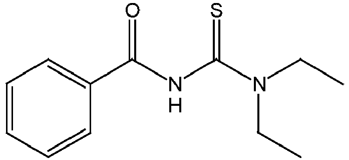 Benzoyl thiodiethylurea (BTDEU) 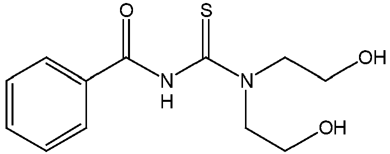 Benzoyl thiodihydroxyethylurea (BTDHEU) 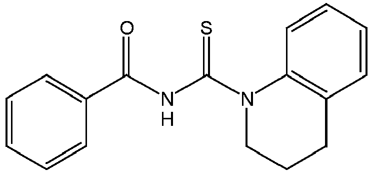 Benzoyl tetrahydroquinoline thiourea (BTHQTU) 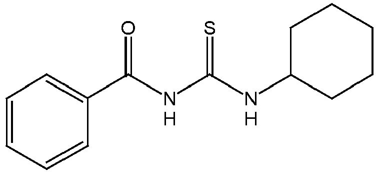 Benzoyl cyclohexylthiourea (BCHTU) 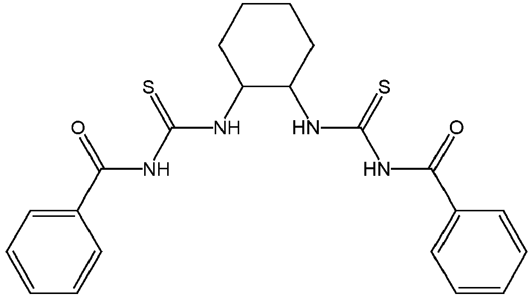 Cyclohexyl bis-Benzoylthiourea (CH bis-BTU) 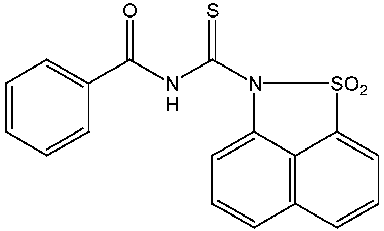 Benzoyl napthosultam thiourea (BNSTU) 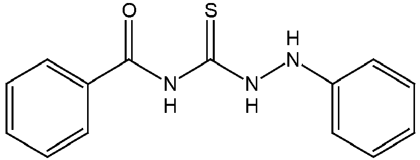 Benzoyl phenylhydrazide thiourea (BPHTU) 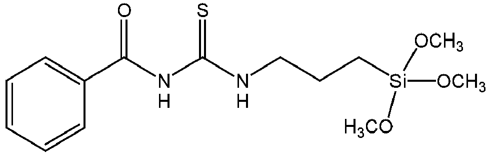 Benzoyl thiourea propyl trimethoxysilane (BTU-PTS) 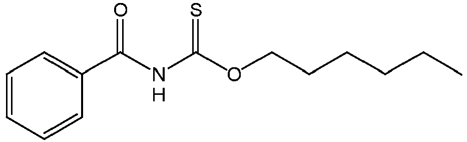 BTU-H Adduct 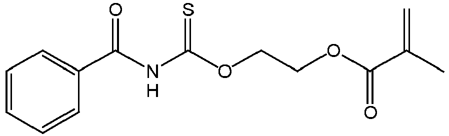 BTU-HEMA Adduct 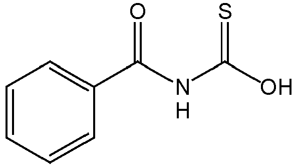 BTU-Water Adduct 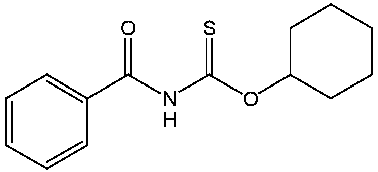 BTU-CH Adduct 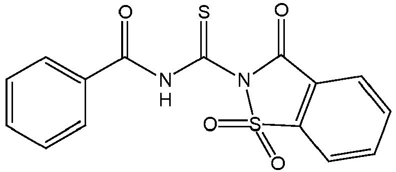 Benzoyl saccharinthiourea (BTU-BS) 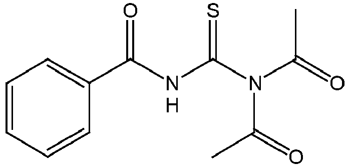 Benzoyl diacetamide urea (BDU)

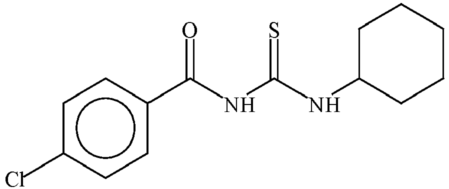

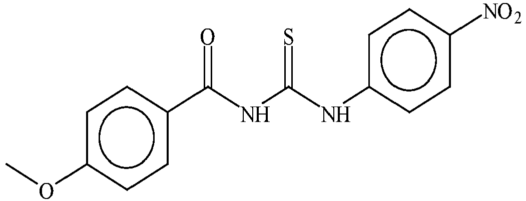

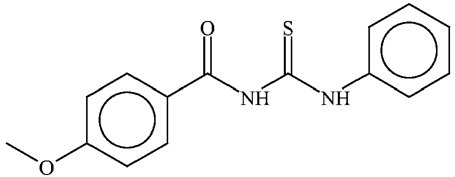

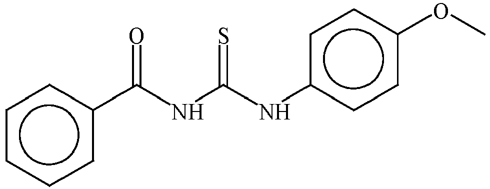

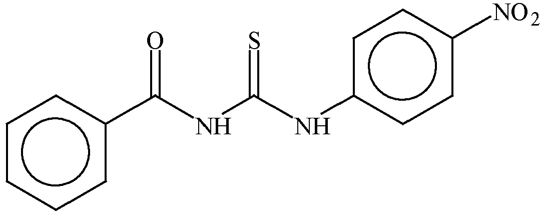

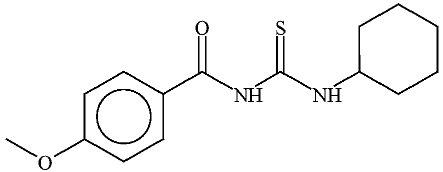

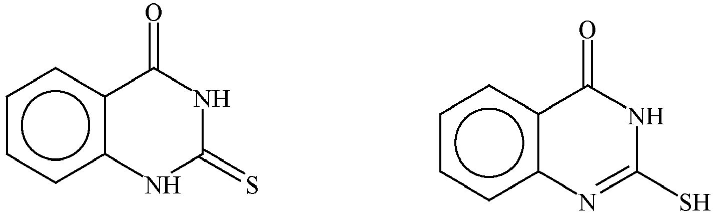

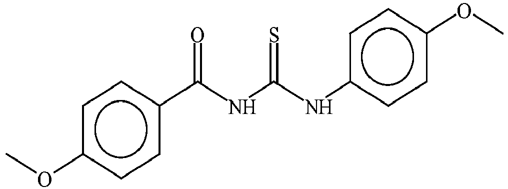

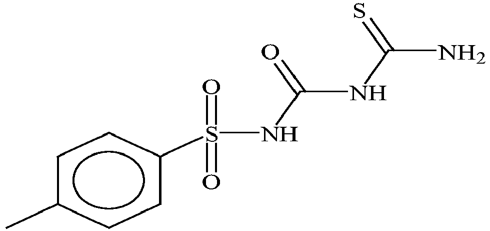

The benzoylthiourea or benzoylthiourethane derivatives may be employed in the adhesive compositions in amounts useful to enhance the adhesive properties of the compositions. For example, they may be present in amounts of 0.25 percent by weight to 10 percent by weight, such as 1 percent by weight to 5 percent by weight of the total composition.

### Constituents Used in Either or Both of Part (A) or Part (B)

### Plasticizers

Plasticizers may be used in either part or in both parts of the two part composition. Plasticizers may be any liquid or soluble compound that assists with the flexibility of the reactive portion of the composition and/or may act as a carrier vehicle for other components of the composition. Examples include aromatic sulfonamides, aromatic phosphate esters, alkyl phosphate esters, dialkylether aromatic esters, polymeric plasticizers, dialkylether diesters, polyglycol diesters, tricarboxylic esters, polyester resins, aromatic diesters, aromatic triesters (trimellitates), aliphatic diesters, epoxidized esters, chlorinated hydrocarbons, aromatic oils, alkylether monoesters, naphthenic oils, alkyl monoesters, paraffinic oils, silicone oils, di-n-butyl phthalate, diisobutyl phthalate, di-n-hexyl phthalate, di-n-hepytl phthalate, di-2-ethylhexyl phthalate, 7c,9c-phthalate (linear and branched), diisoctyl phthalate, linear 6c,8c,10c phthalate, diisononyl phthalate, linear 8c-10c phthalate, linear 7c-11c phthalate, diisodecyl phthalate, linear 9c-11c phthalate, diundecyl phthalate, diisodecyl glutarate, di-2-ethylhexyl adipate, di-2-ethylhexyl azelate, di-2-ethylhexyl sebacate, di-n-butyl sebacate, diisodecyl adipate, triethylene glycol capratecaprylate, triethylene glycol 2-ethylhexanote, dibutoxyethyl adipate, dibutoxyethoxyethyl adipate, dibutoxyethoxyethyl formal, dibutoxyethoxyethyl sebacate, tri-2-ethylhexyl trimellitate, tri-(7c-9c(linear)) trimellitate, tri-(8c-10c(linear)) trimellitate, triethyl phosphate, triisopropyl phenyl phosphate, tributyl phosphate, 2-ethylhexyl diphenyl phosphate, trioctyl phosphate, isodecyl diphenyl phosphate triphenyl phosphate, triaryl phosphate synthetic, tributoxyethyl phosphate, tris(-chloroethyl) phosphate, butylphenyl diphenyl phosphate, chlorinated organic phosphate, cresyl diphenyl phosphate, tris(dichloropropyl) phosphate, isopropylphenyl diphenyl phosphate, trixylenyl phosphate, tricresyl phosphate, diphenyl octyl phosphate. Combinations of plasticizers are useful.

The amount of the plasticizer used in the composition as a whole may be from 0 to 5 percent by weight, such as 0.1 to 1 percent by weight of the total composition.

### Block Copolymers

When used, the block copolymer may be any block copolymer capable of contributing to the physical properties desired for the disclosed composition. The block copolymers may be present in either or both parts of the two part composition.

The block copolymer rubber may be constructed using blocks of either butadiene or isoprene with styrene (for example, SBS, SIS, SEBS and SB), commercial examples of which are available from Shell Chemical Co. as KRATON D-1116 and other KRATON D-grade elastomers from Dexco as VECTOR 2411IP.

Other elastomers with Tg below about 25°C, which are soluble in methacrylate/acrylate monomers, can be used in place of the block copolymer rubbers. Examples of such are the homopolymer of epichlorohydrin and its copolymers with ethylene oxide, available from Zeon Chemicals as HYDRIN, acrylate rubber pellets, available from Zeon as HYTEMP, polyisoprene rubber, polybutadiene rubber, nitrile rubber, and SBR rubber (random copolymer of butadiene and styrene).

Still other block copolymers may be a styrene maleic anhydride copolymer, represented by the formula: 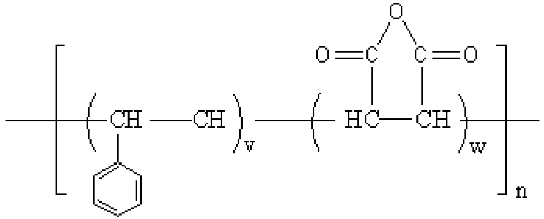 where v is from 1 to 12; w is from 1 to 6; and n is from 1 to 50.

Styrene maleic anhydride copolymers are well known and some of which are available commercially from Sartomer Company, Inc., Exton, PA under the trade name SMA EF80, for example. Styrene maleic anhydride copolymers represent the copolymerization product of styrene and maleic anhydride and are characterized by alternating blocks of styrene and maleic anhydride moieties.

Amphiphilic block copolymers may be particularly desirable. Arkema offers for sale commercially an amphiphilic block copolymer under the trademark NANOSTRENGTH. Such block copolymers are currently available in two versions: SBM and MAM. The SBM copolymer is reportedly made of polystyrene, 1,4-polybutadiene and syndiotactic poly(methyl methacrylate).

In addition, a polymer material constructed from polymethyl methacrylate ("PMMA") and polybutyl acrylate ("PB") may be used too. Polymer materials within this class are referred to as polymethylmethacrylate-block-polybutylacrylateblock polymethylmethacrylate copolymers ("MAM").

As reported by Arkema, MAM is a triblock copolymer, consisting of about 70% PMMA and 30% PB. MAM is constructed from distinct segments, which provides for the ability to selfassemble at the molecular scale. That is, M confers hardness to the polymer and A confers elastomeric properties to the polymer.

A hard polymer segment tends to be soluble in (meth)acrylates, whereas the elastomeric segments provide toughness to the polymeric (meth)acrylate, which forms upon cure. MAM also reinforces mechanical properties, without compromising inherent physical properties. MAM is commercially available under the tradename NANOSTRENGTH, at present under several different grades i.e., E-21 and M-52N.

Arkema promotes the NANOSTRENGTH product line as an acrylic block copolymer that is miscible with many polymers, most of which according to the manufacturer are major industrial epoxy resins. See also U.S. Patent No. 6,894,113 (Court), where in its abstract the '113 patent speaks to a thermoset material with improved impact resistance. The impact resistance is derived from 1 to 80% of an impact modifier comprising at least one copolymer comprising S-B-M, B-M and M-B-M blocks, where each block is connected to the other by a covalent bond or of an intermediary connected to one of the blocks by a covalent bond and to the other block by another covalent bond, M is a PMMA homopolymer or a copolymer comprising at least 50% by weight of methyl methacrylate, B is incompatible with the thermoset resin and with the M block and its glass transition temperature Tg is less than the operating temperature of the thermoset material, and S is incompatible with the thermoset resin, the B block and the M block and its Tg or its melting temperature is greater than the Tg of B.

Another commercially available example of an amphiphilic block copolymer is a polyether block copolymer known to the trade as FORTEGRA 100, from Dow Chemical Co. Dow describes FORTEGRA 100 as a low viscosity toughening agent designed for use as a high efficiency second phase, in amine cured epoxy systems. FORTEGRA 100 is reported to provide improved toughness without significantly affecting the viscosity, glass transition temperature, corrosion resistance, cure rate or chemical resistance of the final coating or composition. FORTEGRA 100 is also reported to be useful for formulation into standard bisphenol A and bisphenol F epoxy systems as it does not participate in the epoxy cure reaction. As a second phase toughening agent, FORTEGRA 100 is promoted as being effective when formulated at a specific volume fraction of the finish film or part, typically 3% to 8% by dry volume is said to achieve the toughening effect.

Additional block copolymers include those which comprise both hydrophobic and hydrophilic segments or portions, of the general formula:

-[(R¹)ᵥ-(R²)_{w}]ₙ-

where here R¹ is independently a hydrophobic olefin, such as ethylene, propylene, 1-butene, 1-hexene, 3-methyl-1-pentene, or 4-methyl-1-pentene or a polymerizable hydrophobic aromatic hydrocarbon such as styrene; each R² is a hydrophilic acid anhydride, such as maleic anhydride; v is from 1 to 12; w is from 1 to 6; and n is from 1 to 50.

The ratio of the hydrophobic segments to the hydrophilic segments in the styrene maleic anhydride block copolymer may be at least 2:1, such as between 3:1 and 12:1. The hydrophilic segments in the block copolymer should comprise an anhydride, such as maleic anhydride. The hydrophobic segments in the block copolymer should comprise at least one of ethylene, propylene, 1-butene, 1-hexene, 3-methyl-1-pentene, 4-methyl-1-pentene, or styrene. Desirably, the block copolymer should be prepared with the hydrophilic segments comprising maleic anhydride and the hydrophobic segments comprising styrene.

Reference to the following U.S. patent documents shows amphiphilic block copolymers suitable for use herein. U.S. Patent No. 7,745,535 (Schmidt) is directed to and claims an amphiphilic multiblock copolymer where at least one block is a profiled block consisting of a) a hydrophilic middle block made from one or more monomeric units selected from acrylic acid, methacrylic acid, and the salts, esters, anhydrides and amides of acrylic acid and methacrylic acid; dicarboxylic acid anhydrides; carboxyethyl acrylate; and acrylamides; and b) hydrophobic end blocks where the multiblock copolymer is water insoluble, water indispersible, and not soluble or dispersible in C₁₋₃ alcohols.

U.S. Patent No. 7,820,760 (Pham) is directed to and claims a curable adhesive epoxy resin composition including (a) an epoxy resin; (b) an amphiphilic block copolymer containing at least one epoxy resin miscible block segments and at least one epoxy resin immiscible block segments (where the immiscible block segment comprises at least one polyether structure provided that the polyether structure of the immiscible block segment contains at least one or more alkylene oxide monomer units having at least four carbon atoms); and (c) at least one curing agent. The amphiphilic block copolymer in the '760 patent is an all polyether block copolymer such as a PEO-PBO diblock copolymer or a PEO-PBO-PEO triblock copolymer. The amphiphilic block copolymer is present in an amount such that when in the '760 patent the epoxy resin composition is cured, the bond strength of the resulting cured epoxy adhesive resin composition increases compared to an epoxy resin composition without the amphiphilic polyether block copolymer.

U.S. Patent No. 7,670,649 (Hoyles) is directed to and claims a curable ambient cure high-solids coating composition including (a) an epoxy resin; (b) an amphiphilic block copolymer containing at least one epoxy resin miscible block segment (where the immiscible block segment comprises at least one polyether structure provided that the polyether structure of the immiscible block segment contains at least one or more alkylene oxide monomer units) and at least one epoxy resin immiscible block segment; and (c) a sufficient amount of a nitrogencontaining curing agent to cure the coating composition at ambient temperature of less than about 60°C. When the epoxy resin composition is cured, the toughness of the resulting cured epoxy resin composition is increased.

U.S. Patent No. 6,887,574 (Dean) is directed to and claims a curable flame retardant epoxy resin composition including (a) at least one flame retardant epoxy resin; (b) at least one amphiphilic block copolymer; and (c) a curing agent. Such components are present in the curable composition in the appropriate amounts and ratios such that, upon curing, the block copolymer self-assembles into a nano structure morphology, such as a worm-like micelle morphology. The resulting cured product is reported to have a remarkably increased high fracture resistance; and allows the use of flame retardant epoxies in applications where fracture resistance is an issue.

U.S. Patent Application Publication No. 2008/0287595 (Verghese) is directed to a composition comprising (1) a thermosettable resin selected from an epoxy resin, an epoxy vinyl ester resin, an unsaturated polyester resin or a mixture thereof, and (2) an amphiphilic mock copolymer dispersed in the thermosettable resin. In addition, fiber-reinforced plastics (FRP), coatings and composites prepared from the composition are provided as well.

International Patent Publication No. WO 2010/008931 (Turakhia) is directed to a structural composite that uses a block copolymer toughening agent to increase the fracture resistance (toughness) of the structural composite. The structural composite comprises (i) a carbon fiber reinforcing material and (ii) a thermosettable resin composition; wherein the thermosettable resin composition comprises (a) a thermosettable resin and (b) at least one block copolymer toughening agent.

International Patent Publication No. WO 2009/018193 (Verghese) is directed to curable compositions, cured compositions, and methods of forming the same, including an epoxy resin, a curing agent, an amphiphilic toughening agent, and an inorganic nanofiller, where the toughening agent forms a second phase having at least one dimension being on the nanometer scale.

The block copolymer may be used herein in an amount up to 50 weight percent, desirably from 5 to 40 weight percent based on the total weight of the adhesive composition.

The glass transition temperature ("Tg") of the block copolymer should be above 40°C. In one embodiment, the Tg of the block copolymer is between 40°C and 155°C.

The Tg of a polymer is the temperature at which the polymer becomes brittle on cooling or soft on heating. More specifically, Tg defines a pseudo second order phase transition in which a polymer yields, on cooling, a glassy structure with properties similar to those of a crystalline material. Above Tg, the polymer becomes soft and capable of plastic deformation without fracture. While the Tg is occasionally described as the "softening temperature" of a polymer, it is not uncommon for the polymer to begin softening at a temperature below the Tg. This is because, due to the nature of many non-crystalline polymers, the softening of the polymer may occur over a temperature range rather than abruptly at a single temperature value. Tg generally refers to the middle point of this range even though the polymer may begin to soften at a different temperature. For purposes of this application, the Tg of a polymer refers to the value as determined by ASTM E-1356.

The amount of the block copolymer used in the composition as a whole may be from 5 percent by weight to 75 percent by weight, such as 10 percent by weight to 50 percent by weight of the total composition.

### Other Additives

Either or both parts may contain additional additives, such as fillers, lubricants, thickeners, and coloring agents. The fillers provide bulk without sacrificing strength of the adhesive and can be selected from high or low density fillers. Also, certain fillers, such as silica, can confer rheological modification or small particle reinforcements. Commercially available examples include Cab-O-Sil 610 and AEROSIL R8200.

Of particular interest are low density fillers, because the resulting final product has an otherwise lower density than a product without the filler, yet has essentially the same strength characteristics as if the filler was not present.

Also, core shell polymers may be desirable. The core shell polymer is desirably a graft copolymer of the "core shell" type, or may also be a "shell-less" cross-linked rubbery particulate, such as acrylonitrile-butadiene-styrene ("ABS"), methacrylate-butadiene-styrene ("MBS"), and methacrylateacrylonitrile-butadiene-styrene ("MABS"). BLENDEX 338 is an ABS powder from GE Plastics.

### Packaging and Mixing

When prepared in a two part format, each of Part (A) and Part (B) are packaged in separate containers, such as bottles, cans, tubes, or drums.

Part (A) and Part (B) are mixed in a ratio of 1 to 10 Part (a) to 10 to 1 Part (b). Desirably, the ratio of Part (A) to Part (B) is 1 Part (A) to 1 Part (B).

The mixing of the two parts can employ a mixing nozzle, which has fluid inputs for the two components, performs a suitable mixing operation, and dispenses the adhesive mixture directly onto the surface to be bonded. An example of a commercially available mixing and dispensing device is MIXPAC^{®}, available from ConProTec, Salem, NH. The two parts can also be mixed manually in a bowl, bucket, or the like, but the operator needs to ensure that the mixing is thorough. As an aid to ensuring that mixing is complete, each part can be formulated with a dye or pigment, so that after mixing, a third color is formed. For example, one part may have a yellow dye, the other part may have a blue dye, so that after mixing, the complete adhesive composition will be green.

The inventive compositions are excellent adhesives and sealants. On application to a first surface, such as a sheet of metal, fabric or plastic that can be incorporated into a laminated material, a second surface will be mated with the first surface and the two surfaces will be bonded together as the adhesive cures. A further advantage is that no surface preparation is required to bond clean substrates.

By the term "curing" is meant that the chemical reaction converting the fluid mix to the solid bond of this invention. The curing process of this composition is exothermic, and may reach a temperature of 120°C or so, when a large bead of adhesive is used.

After mixing, the adhesive compositions fully cure in 20 minutes at 80°C and within 24 hours at room temperature. Fixture times range from 7 to 10 minutes, at which time the bond will support a 3 Kg load.

### EXAMPLES

Initially, certain acetal-containing (meth)acrylates were synthesized as follows:

### Example A: Preparation of 1-[4-[1-(prop-2-enoyloxy)ethoxy]butoxy}ethyl prop-2-enoate [butanediol diacetal diacrylate ("BDDA")]

A 250ml 3 neck round bottom flask was charged with 1,4 butanediol divinyl ether (50ml, 0.32mol) and methyl ether hydroquinone (0.302 g, 0.0024mol), a stirrer bar and fitted with a reflux condenser, contact thermometer and dropping funnel. The reaction vessel was heated to a temperature of 80°C and acrylic acid (46.1g, 0.64mol) was added dropwise with stirring as the reaction temperature was maintained at 80°C for 5 hours. The solution was allowed to cool and was then washed with a saturated aqueous solution of sodium bicarbonate, followed by a washing with a brine solution. The remaining organic layer was dried over magnesium sulfate and dried under vacuum to leave a colourless oil. Yield: 63.47g. IR analysis showed the -OH peak of the acrylic acid was no longer present.

### Example B: Preparation of 1-[4-[1-(methylprop-2-enoyloxy)ethoxy]butoxy]ethyl methylprop-2-enoate [butanediol diacetal dimethacrylate ("BDDMA")]

A 250ml 3 neck round bottom flask was charged with 1,4 butanediol divinyl ether (50ml, 0.32mol) and methyl ether hydroquinone (0.302 g, 0.0024mol), a stirring bar and fitted with a reflux condenser, contact thermometer and dropping funnel. The reaction vessel was heated to 80°C and methacrylic acid (55.1g, 0.64mol) was added dropwise while the solution was stirred. The reaction vessel was maintained at a temperature of 80°C for 5 hours, after which time the reaction mixture was allowed to cool to room temperature. The reaction mixture was thereafter washed with a saturated aqueous solution of sodium bicarbonate, followed by a washing with a brine solution. The remaining organic layer was dried over magnesium sulfate and dried under vacuum to leave a colourless oil. Yield: 67.23g. IR analysis showed the -OH peak of the acrylic acid was no longer present.

### Example C: Preparation of 1,4-bis(1-propoxyethyl) (2Z)-but-2-enediote [maleic acid dibutyl acetal ("MADBA")]

A 250ml 3 neck round bottom flask was charged with butanevinyl ether (50ml, 0.39mol) and methyl ether hydroquinone (0.302 g, 0.0024mol), a stirrer bar and fitted with a reflux condenser, contact thermometer and dropping funnel. The reaction mixture was heated to 40°C and maleic acid (68.44g, 0.64mol) dissolved in methanol (200ml) was added dropwise while the solution was stirred. The temperature of the reaction vessel was maintained at 80°C for 5 hours. The solution was allowed to cool and was then washed with a saturated aqueous solution of sodium bicarbonate, followed by a washing with a brine solution. The remaining organic layer was dried over magnesium sulfate and dried under vacuum to leave a colourless oil. Yield was 99.66g of product. IR analysis showed the -OH peak of the acrylic acid was no longer present.

### Example D: Preparation of 1-propoxyethyl prop-2-enoate [butylacetal acrylate ("BAA")]

A 250ml 3 neck round bottom flask was charged with butanevinyl ether (50ml, 0.39mol) and methyl ether hydroquinone (0.302 g, 0.0024mol), a stirrer bar and fitted with a reflux condenser, contact thermometer and dropping funnel. The flask contents was heated to 40°C and acrylic acid (28.1g, 0.39mol) was added dropwise while the solution was stirred. The temperature of the contents of the vessel was maintained at 40°C for 5 hours. The solution was allowed to cool and was then washed with a saturated aqueous solution of sodium bicarbonate, followed by a washing with a brine solution. The remaining organic layer was dried over magnesium sulfate and dried under vacuum to leave a colourless oil. Yield was 50.46g of product. IR analysis of the product showed that the -OH peak of the acrylic acid was no longer present.

### Two-Part (Meth)acrylate Compositions

The following two part adhesive compositions were prepared as set forth in Table I below. The Part (A) composition was prepared by mixing together the components in the amounts (phr) as listed to form a homogeneous blend, using mixing speeds of about 2500 RPMs for about 2-3 minutes. The Part (B) composition was similarly separately formed. The Part (A) composition was used without change throughout the examples.

**Table 1 -- Part A**

| **Constituents** | **Wt.%** |
|---|---|
| 30 wt.% Magnum 3904 ABS Rubber in THFMA | 82.5 |
| Methacrylic Acid | 10 |
| Cyclohexyl BTU | 5 |
| Hydrophobic Silica | 2.5 |

Table 2 below shows a list of the Part B compositions, which are otherwise the same save for the acetal-containing (meth)acrylate compound chosen and a control formulation (Part (B1)) without such a compound.

**Table 2 -- Part B**

| **Constituents** | **B1** | **B2** | **B3** | **B4** | **B5** |
|---|---|---|---|---|---|
| | **Wt.%** | **Wt.%** | **Wt.%** | **Wt.%** | **Wt.%** |
| 30 wt% Magnum 3904 ABS Rubber in THFMA | 92.5 | 87.5 | 87.5 | 87.5 | 87.5 |
| Hydrophobic Silica | 2.5 | 2.5 | 2.5 | 2.5 | 2.5 |
| Cumene Hydroperoxide | 5 | 5 | 5 | 5 | 5 |
| BDDA | -- | 5 | -- | -- | -- |
| BDDMA | -- | -- | 5 | -- | -- |
| MADBA | -- | -- | -- | 5 | -- |
| BAA | -- | -- | -- | -- | 5 |

### Physical Properties/Performance

Table 3 below shows the results observed and recorded for tensile shear values obtained according to ASTM D3163 when using an adhesive formulation with a Part (B) Composition from Table 2 above. These Part (B) Compositions were mixed in equal parts by weight with the Part (A) Composition from Table 1.

Inked glass substrates were bonded to PC-ABS substrates with the Part (A)/Part (B) combinations mixed above.

To initiate debonding, the bonded lap shear substrates were placed in an oven at a temperature of 80°C for 10 minutes after room temperature curing for 24 hours. After removal from the oven, the samples were allowed to cool under ambient conditions for 5 minutes before being evaluated for bond strength.

**Table 3**

| **Physical Property** | **Part B/ Acetal Monomer** | | | | |
|---|---|---|---|---|---|
| | **B1** | **B2** | **B3** | **B4** | **B5** |
| | **None** | **BDDA** | **BDDMA** | **MADBA** | **BAA** |
| Tensile Shear, 24 hour cure at room temp (Psi) | 489 | 519 | 457 | 555 | 86 |
| Tensile shear, 24 hour cure at room temp and oven heating for 10min at 80°C (Psi) | 450 | 18 | 18 | 13 | 8 |
| % reduction in bond strengths post oven heating | 9.2 | 96.5 | 97.1 | 97.7 | 90.7 |

The results shown in Table 3 demonstrate that inclusion of an acetal-containing (meth)acylate enables debonding of these bonded substrates after oven heating for 10 minutes at 80°C compared to the control.

### Environmental Resistance

Ink coated glass substrates were bonded to PC-ABS substrates using these Part (A)/Part (B) combinations as above. After 24 hours of curing at room temperature. The bonded lap shears were stored in a humidity chamber for 10 days in an 85°C/95% relative humidity environment. The samples were evaluated after conditioning for a period of 1 hour under ambient conditions. Table 4 below shows the bond strengths after heat/humidity conditioning in comparison to bond strengths after 24 hour room temperature cure.

**Table 4**

| **Physical Property** | **Part B/Acetal Monomer** | | | | |
|---|---|---|---|---|---|
| | **B1** | **B2** | **B3** | **B4** | **B5** |
| | **None** | **BDDA** | **BDDMA** | **MADBA** | **BAA** |
| Tensile Shear, 24 hour cure at room temp (Psi) | 489 | 519 | 457 | 555 | 86 |
| Tensile shear post 10 days at 85°C/95% relative humidity | 590 | 665 | 475 | 100 | 76 |

The results observed and recorded in Table 4 show that for the control (B1) and for the BDDA- and BDDMA-containing compositions (B2 and B3, respectively) tensile shear strength performance is comparable. However, the remaining compositions with the other acetal-containing (meth)acrylates (B4 and B5) there is a drop-off in tensile shear strength after the humid/heat ageing test.

BDDA-containing compositions demonstrated good performance under demanding environmental conditions. For instance, results of thermal cycling on bonded inked glass to PC-ABS lap shears are shown in Table 5.

Thermal cycle chamber parameters: 20 cycles of 25°/95%RH for 1.5 hours, ramped to 65°/95%RH for 4 hours, then ramped to 30°C/95%RH for 1.5 hours and left at 30°C/95%RH for 1 hour. Lap shear specimens were then removed and left at room temperature for 24 hours.

**Table 5**

| **Part B** | **Initial (psi)** | **Post Thermal Cycling (psi)** |
|---|---|---|
| B1 (No acetal monomer) | 489 | 488 |
| B2 (5 wt.% BDDA) | 519 | 457 |

The results indicate that the debondable formulation shows good thermal cycling resistance.

## Claims

1. An adhesive composition in a two part configuration comprising:
(a) Part (A) comprising a (meth)acrylate component, an organic peroxide and a hemiacetal ester-containing free radically curable component, wherein the hemiacetal ester-containing free radically curable component is represented by compounds selected from the group consisting of 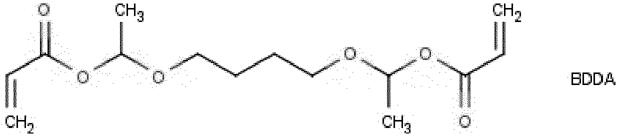 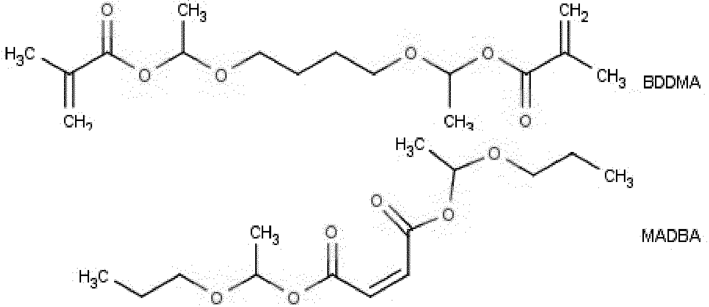 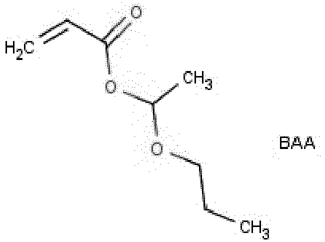 ; and
(b) Part (B) comprising a (meth)acrylate component, and benzoylthiourea derivatives or benzoylthiourethane derivatives,and an acid or acid ester, wherein the (meth)acrylate component of the Part (A) and the Part (B) is selected from the group consisting of tetrahydrofurfuryl (meth)acrylate, methyl (meth)acrylate, ethyl (meth) acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(meth)acryloyloxypropyl trimethoxysilane, (meth)acrylic acid-ethylene oxide adduct, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate,
2-perfluorohexadecylethyl (meth)acrylate, ethoxylated trimethylolpropane triacrylate, trimethylol propane trimethacrylate, dipentaerythritol monohydroxypentacrylate, pentaerythritol triacrylate, ethoxylated trimethylolpropane triacrylate, 1,6-hexanedioldiacrylate, neopentyl glycoldiacrylate, pentaerythritol tetraacrylate, 1,2-butylene glycoldiacrylate, trimethylopropane ethoxylate tri(meth)acrylate, glyceryl propoxylate tri(meth)acrylate, trimethylolpropane tri(meth)acrylate, dipentaerythritol monohydroxy penta(meth)acrylate, tri(propylene glycol) di(meth)acrylate, neopentylglycol propoxylate di(meth)acrylate, 1,4-butanediol di(meth)acrylate, polyethyleneglycol di(meth)acrylate, triethyleneglycol di(meth)acrylate, butylene glycol di(meth)acrylate, ethoxylated bisphenol A di(meth)acrylate, and combinations thereof.

2. The composition of claim 1, wherein the benzoylthiourea derivatives or benzoylthiourethane derivatives are represented by compounds within the general structure below: 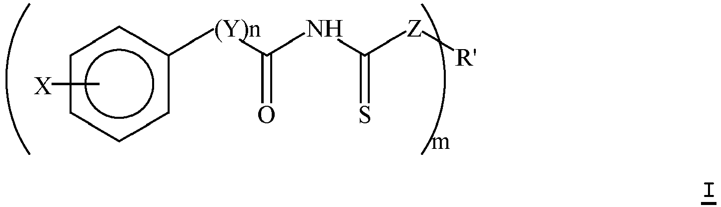
wherein Z is O or N-R, where R is selected from hydrogen, alkyl, alkenyl, hydroxyalkyl, hydroxyalkenyl, carbonyl, alkylene (meth)acrylate, carboxyl, or sulfonato, or R' is a direct bond attaching to the phenyl ring; R' is selected from hydrogen, alkyl, alkenyl, cycloalkyl, aryl, hydroxyalkyl, hydroxyalkenyl, alkylene- or alkenylene-ether, carbonyl, alkylene (meth)acrylate, carboxyl, nitroso or sulfonato; X is halogen, alkyl, alkenyl, hydroxyalkyl, hydroxyalkenyl, alkoxy, amino, carboxyl, nitroso, sulfonate, hydroxyl or haloalkyl; and Y is -SO₂NH-, -CONH-, -NH-, and - PO(NHCONHCSNH₂)NH-; and n is 0 or 1 and m is 1 or 2; or 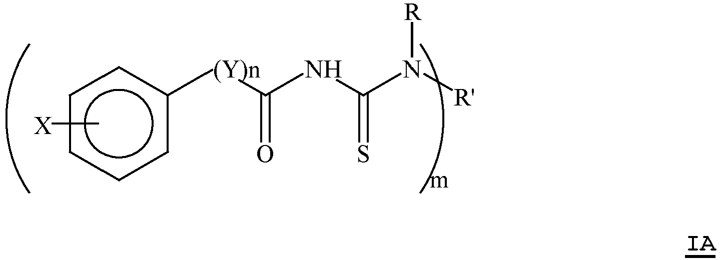
wherein R and R' are independently selected from hydrogen, alkyl, alkenyl, aryl, hydroxyalkyl, hydroxyalkenyl, alkylene (meth)acrylate, carbonyl, carboxyl, or sulfonato, or R and R' taken together form a carbocyclic or hetero atom-containing ring, or R' is a direct bond attaching to the phenyl ring; X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl or haloalkyl; and Y is -SO₂NH-, -CONH-, - NH-, and -PO(NHCONHCSNH₂)NH-; and n is 0 or 1 and m is 1 or 2.

3. The composition of claim 1, wherein the benzoylthiourea derivatives or benzoylthiourethane derivatives are represented by compounds within the general structure below: 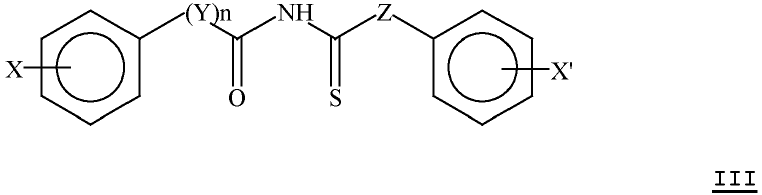 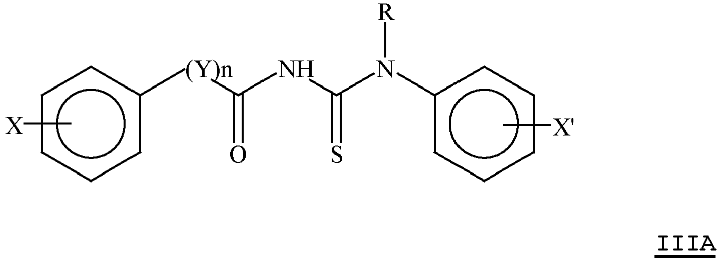 wherein R, X, Y, and n are as defined above, and X' is defined as X.

4. The composition of claim 1, wherein the benzoylthiourea derivatives or benzoylthiourethane derivatives are represented by compounds within the general structure below: 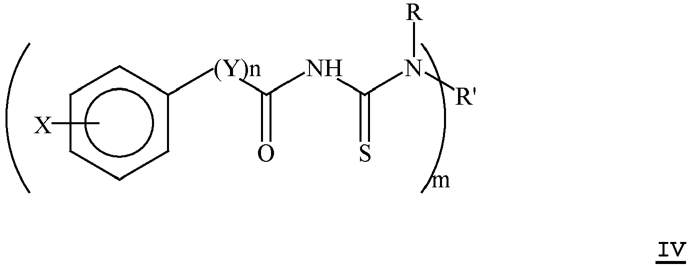 wherein R, R', X, Y, and n are as defined above, and m is 2.

5. The adhesive composition of Claim 1, further comprising a block copolymer.

6. The composition of claim 1, wherein the acid or acid ester is acrylic acid, methacrylic acid, sulphonic acid, sulphonic acid derivatives, phosphoric acid or phosphate esters.

7. A method of preparing the two-part adhesive composition of claim 1 comprising:
(a) forming Part (A) comprising a (meth)acrylate component, an organic peroxide and a hemiacetal ester-containing free radically curable component, wherein the hemiacetal ester-containing free radically curable component is represented by compounds selected from the group consisting of 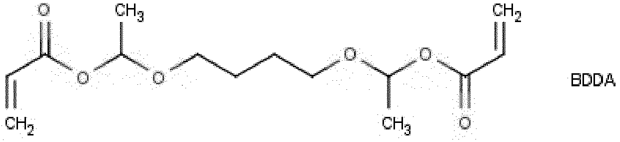 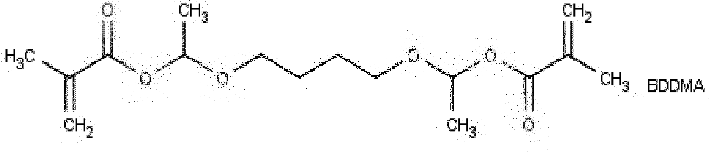 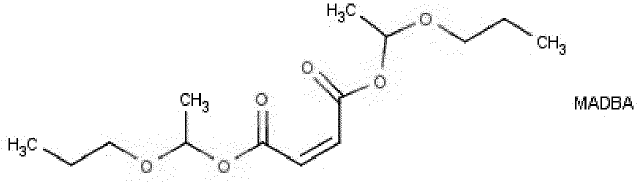 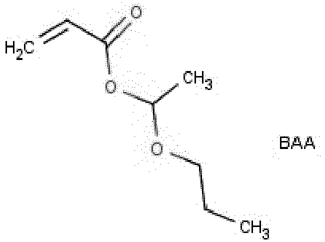 ; and
(b) forming Part (B) comprising a (meth)acrylate component, and benzoylthiourea derivatives or benzoylthiourethane derivatives,and an acid or acid ester.

8. A method of bonding a first surface to a second surface, comprising:
providing the two part composition of claim 1 comprising:
Part (A) comprising a (meth)acrylate component, an organic peroxide and a hemiacetal ester-containing free radically curable component wherein the hemiacetal ester-containing free radically curable component is represented by compounds selected from the group consisting of 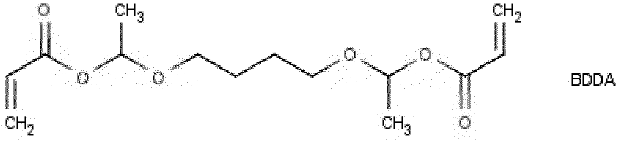 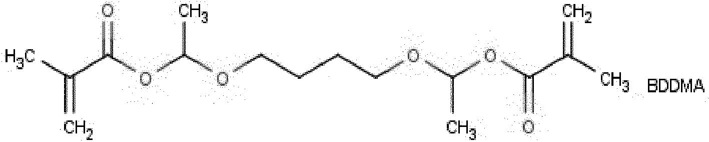 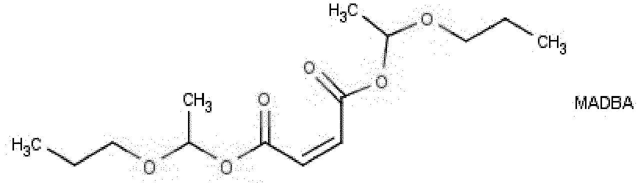 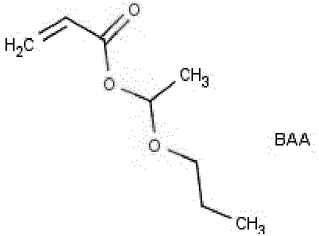
(a) ; and
(b) Part (B)comprising a (meth)acrylate component, and benzoylthiourea derivatives or benzoylthiourethane derivatives,and an acid or acid ester.

9. An adhesive composition comprising:
(a) a (meth)acrylate component selected from those listed in claim 1;
(b) a cure package comprising an organic peroxide and benzoylthiourea derivatives or benzoylthiourethane derivatives;
(c) an acid or acid ester and a hemiacetal ester-containing free radically curable component, wherein the hemiacetal ester-containing free radically curable component is represented by compounds selected from the group consisting of

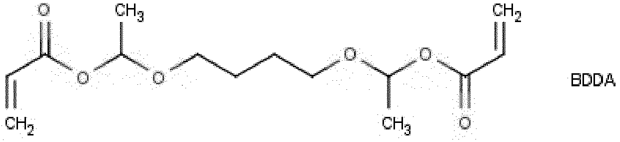

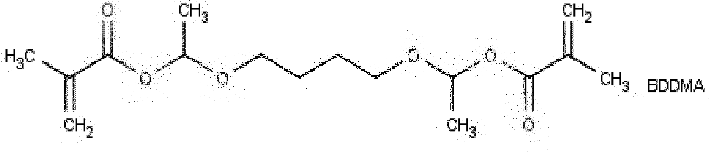

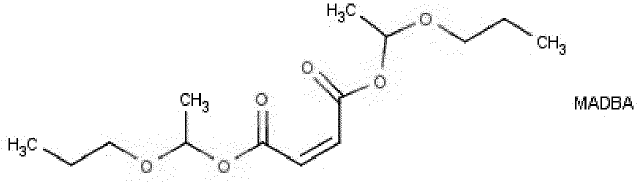

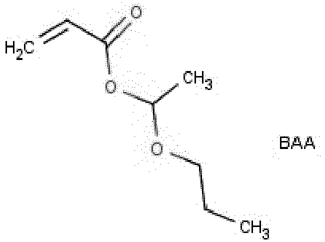

## Patentansprüche

1. Klebstoffzusammensetzung in einer zweiteiligen Konfiguration, umfassend:
(a) Teil (A), umfassend eine (Meth)acrylatkomponente, ein organisches Peroxid und eine Hemiacetalester enthaltende radikalisch härtbare Komponente, wobei die Hemiacetalester enthaltende radikalisch härtbare Komponente durch Verbindungen dargestellt wird, die aus der Gruppe ausgewählt sind, bestehend aus 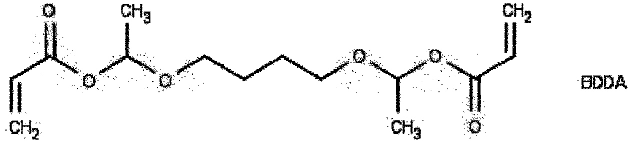 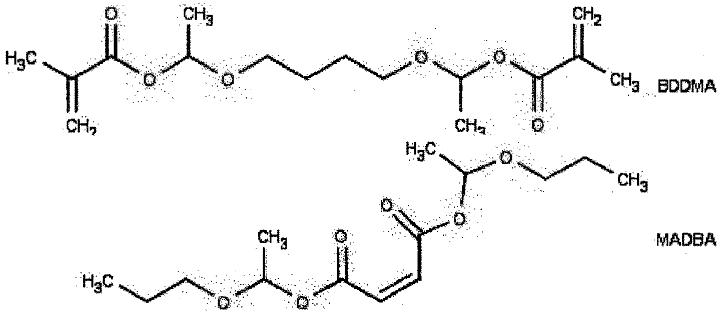 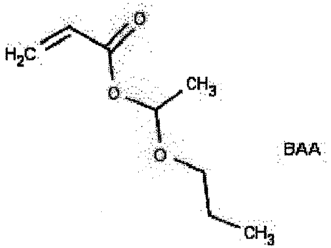 ; und
(b) Teil (B), umfassend eine (Meth)acrylatkomponente und Benzoylthioharnstoffderivate oder Benzoylthiourethanderivate, und eine Säure oder einen Säureester, wobei die (Meth)acrylatkomponente des Teils (A) und des Teils (B) aus der Gruppe ausgewählt ist, bestehend aus Tetrahydrofurfuryl(meth)acrylat, Methyl(meth)acrylat, Ethyl(meth)acrylat, n-Propyl(meth)acrylat, Isopropyl(meth)acrylat, n-Butyl(meth)acrylat, Isobutyl(meth)acrylat, tert-Butyl(meth)acrylat, n-Pentyl(meth)acrylat, n-Hexyl(meth)acrylat, Cyclohexyl(meth)acrylat, n-Heptyl(meth)acrylat, n-Octyl(meth)acrylat, 2-Ethylhexyl(meth)acrylat, Nonyl(meth)acrylat, Decyl(meth)acrylat, Dodecyl(meth)acrylat, Phenyl(meth)acrylat, Tolyl(meth)acrylat, Benzyl(meth)acrylat, 2-Methoxyethyl(meth)acrylat, 3-Methoxybutyl(meth)acrylat, 2-Hydroxyethyl(meth)acrylat, 2-Hydroxypropyl(meth)acrylat, Stearyl(meth)acrylat, Glycidyl(meth)acrylat, 2-Aminoethyl(meth)acrylat, γ-(Meth)acryloyloxypropyltrimethoxysilan, (Meth)acrylsäureethylenoxidaddukt, Trifluormethylmethyl(meth)acrylat, 2-trifluormethylethyl(meth)acrylat, 2-Perfluorethylethyl(meth)acrylat, 2-Perfluorethyl-2-perfluorbutylethyl(meth)acrylat, 2-Perfluorethyl(meth)acrylat, Perfluormethyl(meth)acrylat, Diperfluormethylmethyl(meth)acrylate, 2-Perfluormethyl-2-perfluorethylmethyl(meth)acrylat, 2-Perfluorhexylethyl(meth)acrylat, 2-Perfluordecylethyl(meth)acrylat,
2-Perfluorhexadecylethyl(meth)acrylat, ethoxyliertem Trimethylolpropantriacrylat, Trimethylolpropantrimethacrylat, Dipentaerythritmonohydroxypentacrylat, Pentaerythrittriacrylat, ethoxyliertem Trimethylolpropantriacrylat, 1,6-Hexandioldiacrylat, Neopentylglycoldiacrylat, Pentaerythrittetraacrylat, 1,2-Butylenglycoldiacrylat, Trimethylpropanethoxylattri(meth)acrylat, Glycerylpropoxylattri(meth)acrylat, Trimethylolpropantri(meth)acrylat, Dipentaerythritmonohydroxypenta(meth)acrylat, Tri(propylenglycol)di(meth)acrylat, Neopentylglycolpropoxylatdi(meth)acrylat, 1,4-Butandioldi(meth)acrylat, Polyethylenglycoldi(meth)acrylat, Triethylenglycoldi(meth)acrylat, Butylenglycoldi(meth)acrylat, ethoxyliertem Bisphenol-A-di(meth)acrylat und Kombinationen davon.

2. Zusammensetzung nach Anspruch 1, wobei die Benzoylthioharnstoffderivate oder die Benzoylthiourethanderivate durch Verbindungen innerhalb der nachstehenden allgemeinen Struktur dargestellt werden: 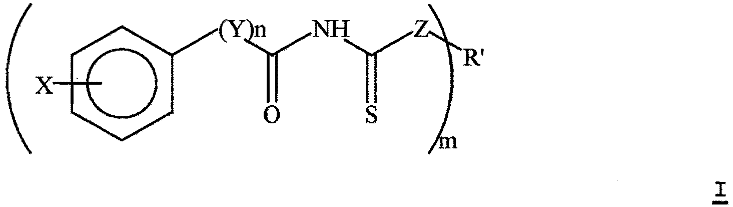
wobei Z O oder N-R ist, wobei R aus Wasserstoff, Alkyl, Alkenyl, Hydroxyalkyl, Hydroxyalkenyl, Carbonyl, Alkylen(meth)acrylat, Carboxyl oder Sulfonato ausgewählt ist, oder R' eine direkte Bindung ist, die sich an den Phenylring anlagert; R' aus Wasserstoff, Alkyl, Alkenyl, Cycloalkyl, Aryl, Hydroxyalkyl, Hydroxyalkenyl, Alkylen- oder Alkenylenether, Carbonyl, Alkylen(meth)acrylat, Carboxyl, Nitroso oder Sulfonato ausgewählt ist; X Halogen, Alkyl, Alkenyl, Hydroxyalkyl, Hydroxyalkenyl, Alkoxy, Amino, Carboxyl, Nitroso, Sulfonat, Hydroxyl oder Haloalkyl ist; und Y -SO₂NH-, -CONH-, -NH- und -PO (NHCONHCSNH₂)NH- ist; und n 0 oder 1 ist und m 1 oder 2 ist; oder 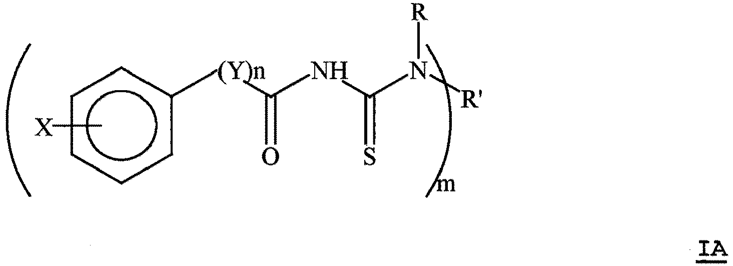
wobei R und R' unabhängig aus Wasserstoff, Alkyl, Alkenyl, Aryl, Hydroxyalkyl, Hydroxyalkenyl, Alkylen(meth)acrylat, Carbonyl, Carboxyl oder Sulfonato ausgewählt sind, oder R und R' zusammengenommen einen carbocyclischen oder Heteroatom enthaltenden Ring ausbilden, oder R' eine direkte Bindung ist, die sich an den Phenylring anlagert; X Halogen, Alkyl, Alkenyl, Cycloalkyl, Hydroxyalkyl, Hydroxyalkenyl, Alkoxy, Amino, Alkylen- oder Alkenylenether, Alkylen(meth)acrylat, Carbonyl, Carboxyl, Nitroso, Sulfonat, Hydroxyl oder Haloalkyl ist; und Y -SO₂NH-, -CONH-,-NH-und -PO(NHCONHCSNH₂)NH ist; und n 0 oder 1 ist und m 1 oder 2 ist.

3. Zusammensetzung nach Anspruch 1, wobei die Benzoylthioharnstoffderivate oder die Benzoylthiourethanderivate durch Verbindungen innerhalb der nachstehenden allgemeinen Struktur dargestellt werden: 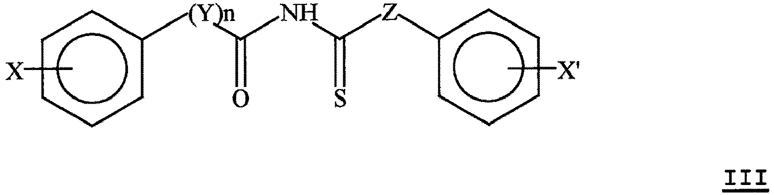 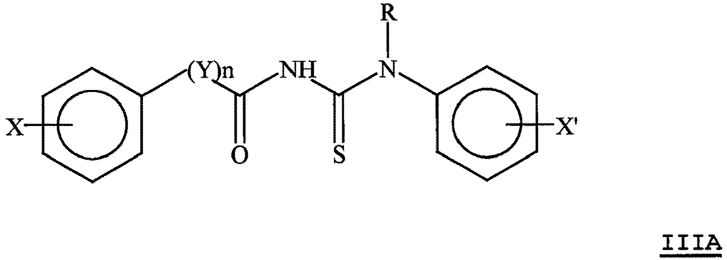 wobei R, X, Y und n wie oben definiert sind und X' als X definiert ist.

4. Zusammensetzung nach Anspruch 1, wobei die Benzoylthioharnstoffderivate oder die Benzoylthiourethanderivate durch Verbindungen innerhalb der nachstehenden allgemeinen Struktur dargestellt werden: 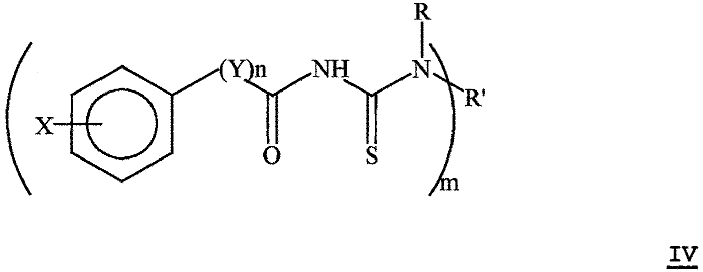 wobei R, R', X, Y und n wie oben definiert sind und m 2 ist.

5. Klebstoffzusammensetzung nach Anspruch 1, ferner umfassend ein Blockcopolymer.

6. Zusammensetzung nach Anspruch 1, wobei die Säure oder der Säureester Acrylsäure, Methacrylsäure, Sulfonsäure, Sulfonsäurederivate, Phosphorsäure oder Phosphatester ist.

7. Verfahren zum Herstellen der zweiteiligen Klebstoffzusammensetzung nach Anspruch 1, umfassend:
(a) Ausbilden von Teil (A), umfassend eine (Meth)acrylatkomponente, ein organisches Peroxid und eine Hemiacetalester enthaltende radikalisch härtbare Komponente, wobei die Hemiacetalester enthaltende radikalisch härtbare Komponente durch Verbindungen dargestellt wird, die aus der Gruppe ausgewählt sind, bestehend aus 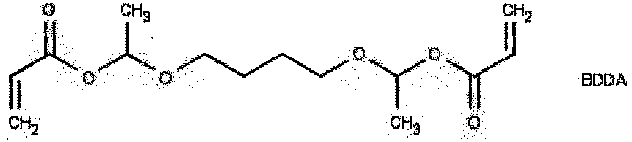 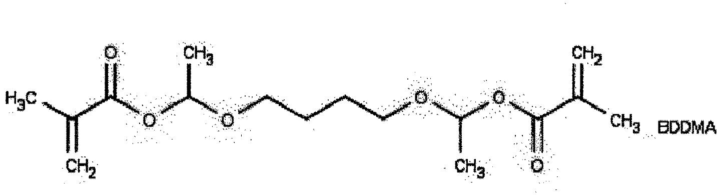 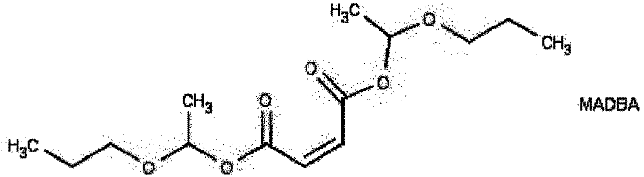 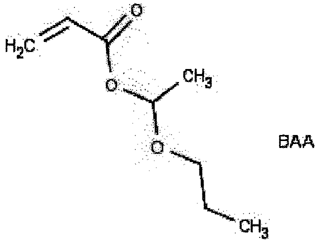 ; und
(b) Ausbilden von Teil (B), umfassend eine (Meth)acrylatkomponente und Benzoylthioharnstoffderivate oder Benzoylthiourethanderivate und eine Säure oder einen Säureester.

8. Verfahren zum Binden einer ersten Oberfläche an eine zweite Oberfläche, umfassend:
Bereitstellen der zweiteiligen Zusammensetzung nach Anspruch 1, umfassend:
Teil (A), umfassend eine (Meth)acrylatkomponente, ein organisches Peroxid und eine Hemiacetalester enthaltende radikalisch härtbare Komponente, wobei die Hemiacetalester enthaltende radikalisch härtbare Komponente durch Verbindungen dargestellt wird, die aus der Gruppe ausgewählt sind, bestehend aus 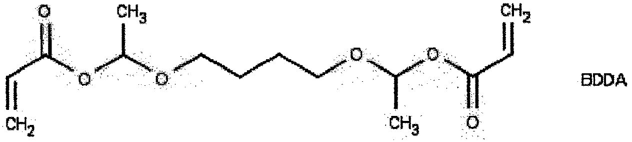 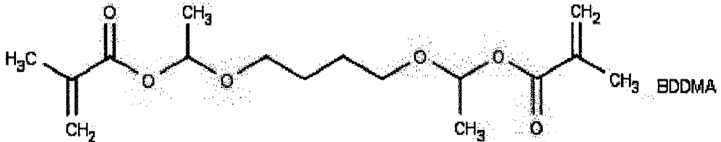 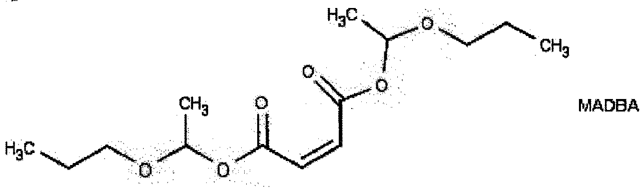 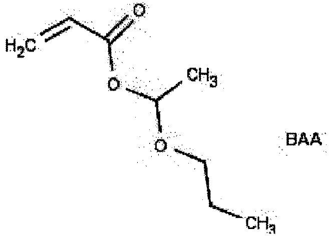
(a) ; und
(b) Teil (B), umfassend eine (Meth)acrylatkomponente und Benzoylthioharnstoffderivate oder Benzoylthiourethanderivate und eine Säure oder einen Säureester.

9. Klebstoffzusammensetzung, umfassend:
(a) eine (Meth)acrylatkomponente, ausgewählt aus jenen, die in Anspruch 1 aufgeführt sind;
(b) ein Härtungspaket, umfassend ein organisches Peroxid und Benzoylthioharnstoffderivate oder Benzoylthiourethanderivate;
(c) eine Säure oder einen Säureester und eine Hemiacetalester enthaltende radikalisch härtbare Komponente, wobei die Hemiacetalester enthaltende radikalisch härtbare Komponente durch Verbindungen dargestellt wird, die aus der Gruppe ausgewählt sind, bestehend aus

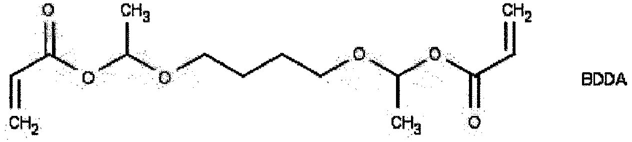

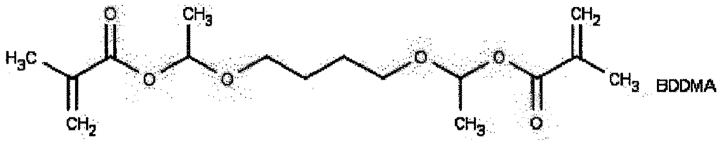

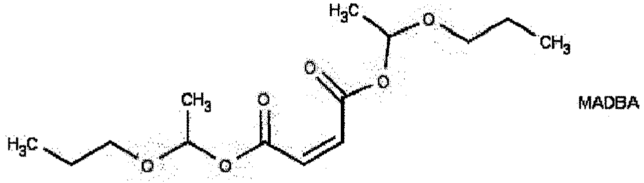

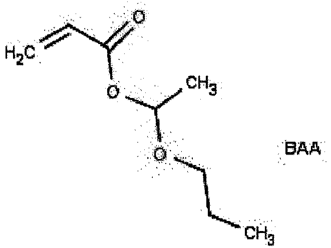

## Revendications

1. Composition adhésive dans une configuration en deux parties comprenant :
(a) une Partie (A) comprenant un composant (méth)acrylate, un peroxyde organique et un composant durcissable par radicaux libres contenant un ester d'hémiacétal, dans laquelle le composant durcissable par radicaux libres contenant un ester d'hémiacétal est représenté par les composés choisis dans le groupe constitué par 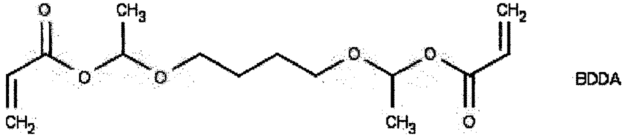 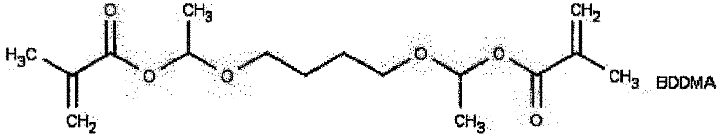 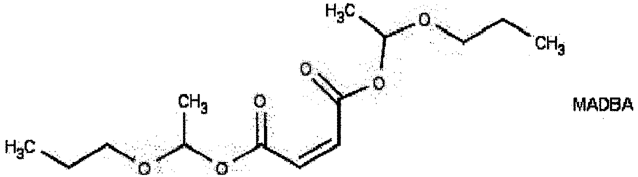 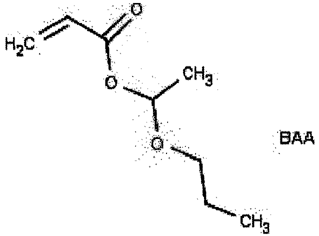 ; et
(b) une Partie (B) comprenant un composant (méth)acrylate, et des dérivés de benzoylthio-urée ou des dérivés de benzoylthio-uréthane, et un acide ou ester d'acide, dans laquelle le composant (méth)acrylate de la Partie (A) et de la Partie (B) est choisi dans le groupe constitué par le (méth)acrylate de tétrahydrofurfuryle, le (méth)acrylate de méthyle, le (méth)acrylate d'éthyle, le (méth)acrylate de n-propyle, le (méth)acrylate d'isopropyle, le (méth)acrylate de n-butyle, le (méth)acrylate d'isobutyle, le (méth)acrylate de tert-butyle, le (méth)acrylate de n-pentyle, le (méth)acrylate de n-hexyle, le (méth)acrylate de cyclohexyle, le (méth)acrylate de n-heptyle, le (méth)acrylate de n-octyle, le (méth)acrylate de 2-éthylhexyle, le (méth)acrylate de nonyle, le (méth)acrylate de décyle, le (méth)acrylate de dodécyle, le (méth)acrylate de phényle, le (méth)acrylate de tolyle, le (méth)acrylate de benzyle, le (méth)acrylate de 2-méthoxyéthyle, le (méth)acrylate de 3-méthoxybutyle, le (méth)acrylate de 2-hydroxyéthyle, le (méth)acrylate de 2-hydroxypropyle, le (méth)acrylate de stéaryle, le (méth)acrylate de glycidyle, le (méth)acrylate de 2-aminoéthyle, le γ-(méth)acryloyloxypropyl triméthoxysilane, un produit d'addition d'acide (méth)acrylique-oxyde d'éthylène, le (méth)acrylate de trifluorométhylméthyle, le (méth)acrylate de 2-trifluorométhyléthyle, le (méth)acrylate de 2-perfluoroéthyléthyle, le (méth)acrylate de 2-perfluoroéthyl-2-perfluorobutyléthyle, le (méth)acrylate de 2-perfluoroéthyle, le (méth)acrylate de perfluorométhyle, le (méth)acrylate de diperfluorométhylméthyle, le (méth)acrylate de 2-perfluorométhyl-2-perfluoroéthylméthyle, le (méth)acrylate de 2-perfluorohexyléthyle, le (méth)acrylate de 2-perfluorodécyléthyle,
le (méth)acrylate de 2-perfluorohexadécyléthyle, le triacrylate de triméthylolpropane éthoxylé, le triméthacrylate de triméthylolpropane, le monohydroxypentacrylate de dipentaérythritol, le triacrylate de pentaérythritol, le triacrylate de triméthylolpropane éthoxylé, le diacrylate de 1,6-hexanediol, le diacrylate de néopentylglycol, le tétraacrylate de pentaérythritol, le diacrylate de 1,2-butylèneglycol, le tri(méth)acrylate de triméthylopropane éthoxylé, le tri(méth)acrylate de glycéryle propoxylé, le tri(méth)acrylate de triméthylolpropane, le monohydroxy penta(méth)acrylate de dipentaérythritol, le di(méth)acrylate de tri(propylène glycol), le di(méth)acrylate de néopentylglycol propoxylé, le di(méth)acrylate de 1,4-butanediol, le di(méth)acrylate de polyéthylèneglycol, le di(méth)acrylate de triéthylèneglycol, le di(méth)acrylate de butylèneglycol, le di(méth)acrylate de bisphénol A éthoxylé, et leurs combinaisons.

2. Composition selon la revendication 1, dans laquelle les dérivés de benzoylthio-urée ou les dérivés de benzoylthio-uréthane sont représentés par les composés dans la structure générale ci-après : 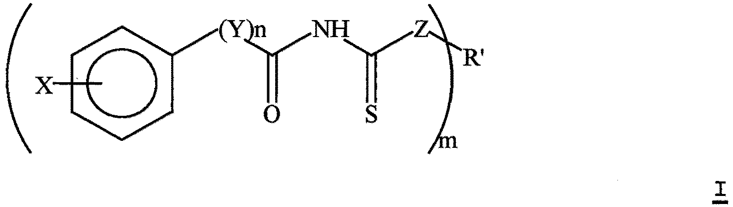
dans laquelle Z est O ou N-R, où R est choisi parmi hydrogène, alkyle, alcényle, hydroxyalkyle, hydroxyalcényle, carbonyle, (méth)acrylate d'alkylène, carboxyle, ou sulfonato, ou R' est une liaison directe s'attachant au cycle phényle ; R' est choisi parmi hydrogène, alkyle, alcényle, cycloalkyle, aryle, hydroxyalkyle, hydroxyalcényle, alkylène- ou alcénylène-éther, carbonyle, (méth)acrylate d'alkylène, carboxyle, nitroso ou sulfonato ; X est halogène, alkyle, alcényle, hydroxyalkyle, hydroxyalcényle, alcoxy, amino, carboxyle, nitroso, sulfonate, hydroxyle ou haloalkyle ; et Y est -SO₂NH-, -CONH-, -NH-, et - PO(NHCONHCSNH)₂)NH- ; et n vaut 0 ou 1 et m vaut 1 ou 2 ; ou 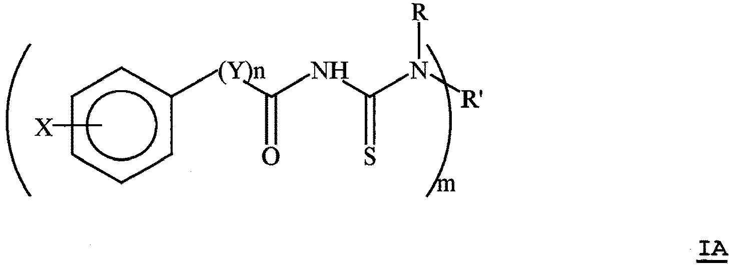
dans laquelle R et R' sont indépendamment choisis parmi hydrogène, alkyle, alcényle, aryle, hydroxyalkyle, hydroxyalcényle, (méth)acrylate alkylène, carbonyle, carboxyle, ou sulfonato, ou R et R' pris conjointement forment un cycle carbocyclique ou contenant un hétéroatome, ou R' est une liaison directe s'attachant au cycle phényle ; X est halogène, alkyle, alcényle, cycloalkyle, hydroxyalkyle, hydroxyalcényle, alcoxy, amino, alkylène- ou alcénylène-éther, (méth)acrylate d'alkylène, carbonyle, carboxyle, nitroso, sulfonate, hydroxyle ou haloalkyle ; et Y est -SO₂NH-, -CONH-, -NH-, et -PO(NHCONHCSNH)₂)NH- ; et n vaut 0 ou 1 et m vaut 1 ou 2.

3. Composition selon la revendication 1, dans laquelle les dérivés de benzoylthio-urée ou les dérivés de benzoylthio-uréthane sont représentés par les composés dans la structure générale ci-après : 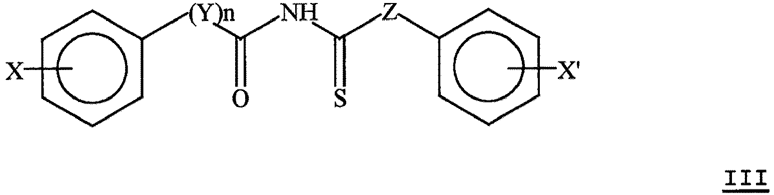 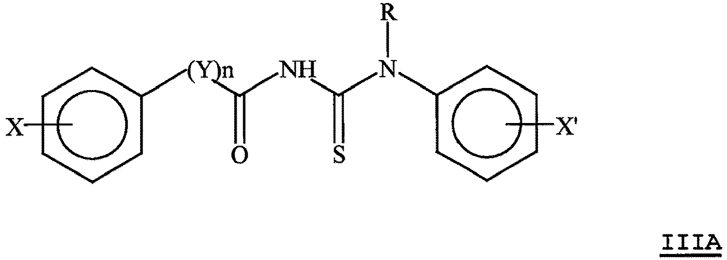 dans laquelle R, X, Y et n sont tels que définis ci-dessus, et X' est défini comme X.

4. Composition selon la revendication 1, dans laquelle les dérivés de benzoylthio-urée ou les dérivés de benzoylthio-uréthane sont représentés par les composés dans la structure générale ci-après : 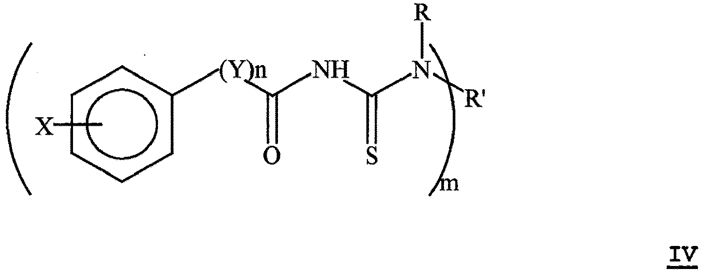 dans laquelle R, R', X, Y et n sont tels que définis ci-dessus, et m vaut 2.

5. Composition adhésive selon la revendication 1, comprenant en outre un copolymère séquencé.

6. Composition selon la revendication 1, dans laquelle l'acide ou l'ester d'acide est l'acide acrylique, l'acide méthacrylique, l'acide sulfonique, les dérivés d'acide sulfonique, les esters d'acide phosphorique ou de phosphate.

7. Procédé de préparation de la composition adhésive en deux parties selon la revendication 1 comprenant :
(a) la formation de la Partie (A) comprenant un composant (méth)acrylate, un peroxyde organique et un composant durcissable par radicaux libres contenant un ester d'hémiacétal, dans lequel le composant durcissable par radicaux libres contenant un ester d'hémiacétal est représenté par les composés choisis dans le groupe constitué par 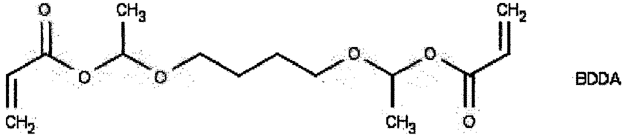 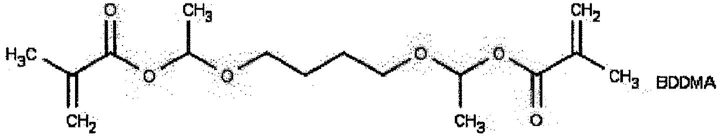 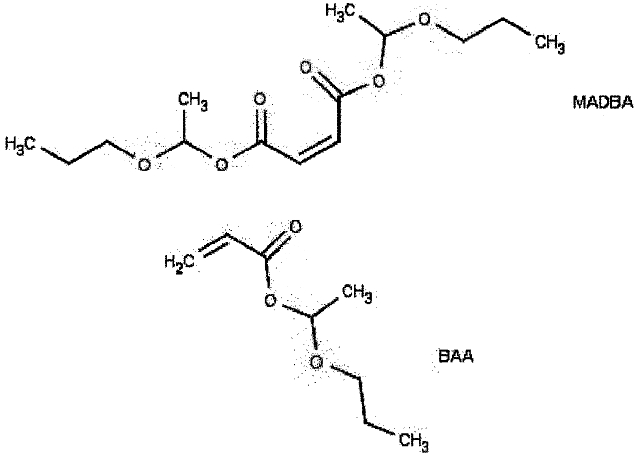 ; et
(b) la formation de la Partie (B) comprenant un composant (méth)acrylate, et des dérivés de benzoylthio-urée ou des dérivés de benzoylthio-uréthane, et un acide ou ester d'acide.

8. Procédé de liaison d'une première surface à une seconde surface, comprenant :
la fourniture de la composition en deux parties selon la revendication 1 comprenant :
une Partie (A) comprenant un composant (méth)acrylate, un peroxyde organique et un composant durcissable par radicaux libres contenant un ester d'hémiacétal, dans lequel le composant durcissable par radicaux libres contenant un ester d'hémiacétal est représenté par les composés choisis dans le groupe constitué par 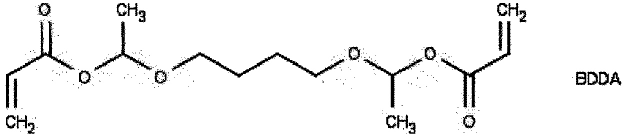 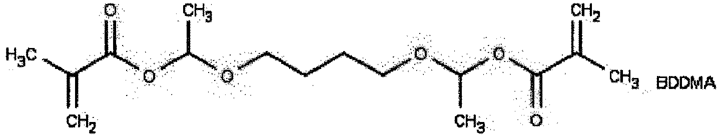 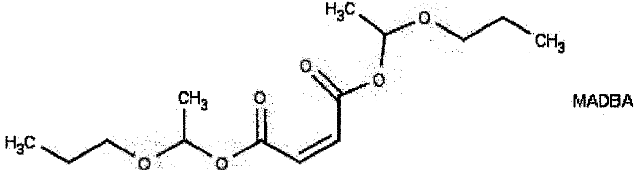 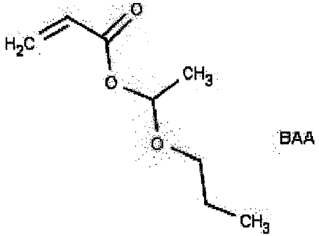
(a) ; et
(b) une Partie (B) comprenant un composant (méth)acrylate, et des dérivés de benzoylthio-urée ou des dérivés de benzoylthio-uréthane, et un acide ou ester d'acide.

9. Composition adhésive comprenant :
(a) un composant (méth)acrylate choisi parmi ceux énumérés dans la revendication 1 ;
(b) un ensemble de durcissement comprenant un peroxyde organique et des dérivés de benzoylthio-urée ou dérivés de benzoylthio-uréthane ;
(c) un acide ou ester acide et un composant durcissable par radicaux libres contenant un ester d'hémiacétal, dans laquelle le composant durcissable par radicaux libres contenant un ester d'hémiacétal est représenté par les composés choisis dans le groupe constitué par
